# EUROPEAN PATENT SPECIFICATION

(11) **EP 3 019 353 B1**
(45) Date of publication and mention of the grant of the patent: **05.09.2018**
(21) Application number: 14736819.5
(22) Date of filing: 08.07.2014
(51) Int. Cl.: B60C 27/06

(54) **FIXING DEVICE FOR A VEHICLE ANTI-SKID DEVICE, AN ANTI-SKID DEVICE AND AN ANTI-SKID ARRANGEMENT COMPRISING THE FIXING DEVICE AND THE ANTI-SKID DEVICE**
FIXIERVORRICHTUNG FÜR EINE FAHRZEUG-ANTIRUTSCHVORRICHTUNG UND ANTIRUTSCHVORRICHTUNG UND ANTIRUTSCH-ANORDNUNG MIT DER FIXIERVORRICHTUNG UND ANTIRUTSCHVORRICHTUNG
DISPOSITIF DE FIXATION POUR DISPOSITIF ANTI-DÉRAPANT DE VÉHICULE, LEDIT DISPOSITIF ANTIDÉRAPANT, ENSEMBLE DE DISPOSITIF ANTIDÉRAPANT COMPORTANT CE DERNIER AINSI QUE LE DISPOSITIF DE FIXATION ASSOCIÉ

(30) Priority: 11.07.2013 EP 13176136
(43) Date of publication of application: 18.05.2016
(73) Proprietor: König IP AB, 330 33 Hillerstorp (SE)
(72) Inventor: COLOMBO, Matteo, I-23885 Calco (LC) (IT); FARINA, Luigi, I-23843 Dolzago (LC) (IT); ARRIGONI NERI, Marco, I-23811 Ballabio (LC) (IT)
(74) Representative: Petruzziello, Aldo
(86) International application number: PCT/EP2014/064608
(87) International publication number: WO 2015/004135

(56) References cited:
- US-A- 2 397 277
- US-A- 3 071 173
- US-A- 3 935 891

## Description

### TECHNICAL FIELD

The present invention refers to an anti-skid arrangement comprising an anti-skid device, comprising a friction increasing member such as a snow chain, adapted to be mounted from the part of a wheel facing towards the outside of a vehicle. The invention also relates to a fixing device for fixing an anti-skid device in an anti-skid arrangement.

### BACKGROUND OF THE INVENTION

Snow chains which are mounted from the outside commonly comprise a central hub from which extends radially a plurality of arms or spokes which are joined to a terminal element which embraces the thread of a vehicle tyre. The terminal elements of the spokes are joined to portions of chain, which follow the thread of the tyre. In this manner the portions of chain can scratch or bite into the snow or into the ice on the road surface to exert a greater friction and to avoid skidding or slipping of the tyres.

For mounting this type of snow chains a fastening device is provided, which is fastened to a wheel bolt or nut. A tensioning strap or chain, which passes through a tensioning/locking device mounted on the hub of the snow chains, is constrained to the fastening device. Thus the user, by pulling the strap manually or by means of a tensioning device, brings the hub of the anti-skid device close to the hub of the wheel, tensioning the snow chains.

An anti-skid arrangement of this type is previously known from EP 2 050 590 A1.

Although the fastening arrangement in EP 2 050 590 A1 allows a snow-chain to be securely attached to a wheel rim in an expedient manner, there remains a need for a further improved anti-skid arrangement.

US 2397277 discloses a fixing device for a vehicle tyre anti-skid device, said fixingdevice comprising a first coupling portion (6) for coupling said fixing device to awheel rim (4) and a second coupling portion (8) for coupling said fixing device to said anti-skid device (13,16),wherein said first coupling portion (6) is configured tobe coupled at a centre bore in said wheel rim with an axial direction of said fixing device coinciding with an axial direction of said centre bore, said fixing devicecomprising locking means (2) for releasably coupling said fixing device to said wheel rim at said centre bore.

US 3935891 discloses an auxiliary tire traction device for use with vehicle tires toprovide increased traction when dictated by road or other conditions wherein thedevice may be detachably secured to the tire to increase contact and driving force for the vehicle.

US 3071173 discloses a fixing device (12) for a vehicle tyre anti-skid device, saidfixing device comprising a first coupling portion (13) for coupling said fixing deviceto a wheel rim (19) and a second coupling portion (11) for coupling said fixingdevice to said anti-skid device, wherein said first coupling portion is configured tobe coupled at a centre bore in said wheel rim with an axial direction of said fixingdevice coinciding with an axial direction of said centre bore, said fixing devicecomprising locking means (16) for releasably coupling said fixing device to said wheel rim at said centre bore.

In particular, the invention aims at providing a further simplified fastening arrangement for an anti-skid device, allowing the anti-skid device to be quickly and reliably secured to a vehicle wheel while requiring a minimum of manipulation.

### SUMMARY OF THE INVENTION

In accordance with the invention, there is provided a fixing device for a vehicle tyre anti-skid device. The fixing device is arranged to be applied to an outwardly facing side of a wheel mounted on a vehicle. The fixing device comprises a first coupling portion for coupling the fixing device to a wheel rim and a second coupling portion for coupling the fixing device to the anti-skid device. The first coupling portion is configured to be coupled at a centre bore in the wheel rim with an axial direction of the fixing device coinciding with an axial direction of the centre bore. The fixing device comprised locking means for releasably coupling the fixing device to the wheel rim at the centre bore.
The locking means for releasably coupling the fixing device to the wheel rim may comprise locking elements such as locking balls, locking rods, pins and may further comprise any suitable mechanism for controlling the locking element or elements as well as any suitable kind of actuation member such as a handle, a knob, a push-button, etc.

The second coupling portion is arranged for coupling the fixing device to the anti-skid device , e.g. by carrying attachment elements forming part of an attachment arrangement comprising a corresponding attachment element on the anti-skid device.
As set out herein, the fixing device has an axial direction and two opposing ends in the axial direction, the first and second coupling portions being arranged at the ends of the fixing device.
The first coupling portion of the fixing device may be a plug portion, the plug portion being configured to fit into the centre bore in the wheel rim. The plug portion comprises locking means for releasably fixing the fixing device in the centre bore in the wheel rim.

The fixing device is arranged to be applied to a wheel rim by means of a quick coupling wherein the means for releasably coupling the fixing device to the wheel rim comprises a snap-fit locking arrangement such as a snap-in locking arrangement or a snap-on locking arrangement.
The snap-fit locking arrangement may comprise an intermediate actuation member such as a spring or a gear which is arranged to directly or indirectly move at least one locking element such as a locking ball or a locking pin between a release position and a fixing position.
The locking means on the fixing device may be constituted by or comprise one or more locking elements, as set out herein.
The fixing device may be considered to constitute an intermediate connection member for connecting an anti-skid device, in particular a snow chain, to a vehicle wheel on the side of the vehicle wheel which is facing outward, toward a person fitting the anti-skid device on the vehicle wheel and may be delivered to a user as a separate part, as a part in a kit further comprising an anti-skid arrangement and/or an adapter device as disclosed herein, or as an integrated element in an anti-skid arrangement.
The fixing device disclosed herein allows for simple, quick and intuitive application of an anti-skid device requiring a minimum of instructions to understand and use. The second coupling portion on the fixing device which is used for coupling of the anti-skid device to the wheel rim by means of the fixing device may be simply a portion of the fixing device that protrudes from the centre of the wheel rim when the fixing device is applied to the wheel rim. In such case, the protruding second coupling portion may be used for attaching a fastening element such as a clamp or a cap onto the second coupling portion. However, the second coupling portion of the fixing device may be provided with one or more coupling elements which are adapted to engage with one or more corresponding coupling elements on the anti-skid device. The corresponding coupling elements on the fixing device and on the anti-skid device may be of the mating type including a female and a male part such as a rim and a groove or a protrusion and a hole.
When the first coupling portion of the fixing device is a plug portion, the plug portion may be sized and configured to fit commonly available wheel rims. Thus, a plug portion on the fixing device may have an outer diameter in the order of from 40 to 60 mm. The fixing device may be offered in a range of sizes with plug portions fitting different commercially available wheel rims.

Another option is to provide adaptor rings that can be used to adapt the size of the plug portion of the fixing device to differently sized wheel rim centre holes. Such adaptor rings may be made from metal or plastic, such as nylon, and may be sold separately or be provided as an accessory together with an anti-skid arrangement or any part of the anti-skid arrangement such as the fixing device, or the anti-skid device, or may be provided together with a wheel rim.

No external tools are required when fitting and fastening the anti-skid device on the vehicle wheel using the fixing device disclosed herein and the anti-skid device can be applied and fastened to the wheel with a few simple and intuitive application steps.

As set out herein, the releasable locking means may comprise a snap-fit locking arrangement, such as a snap-in or snap-on locking arrangement comprising an intermediate actuation member such as a spring or a gear mechanism. A locking/release mechanism comprising an intermediate actuation member may be arranged to move one or more locking elements such as locking balls, locking pins, locking knobs, etc. which are arranged on the fixing device. When the first coupling portion of the fixing device is in the form of a plug portion adapted for insertion into a central bore of a wheel rim, the locking elements may be arranged at the periphery of the plug portion of the fixing device and may be arranged to protrude radially from the outer surface of the plug portion when the arrangement is in a locking position and to be retracted into the interior of the plug portion when the fixing device is to be inserted into a centre bore of a wheel rim or to be removed from the wheel rim.

Any spring arrangement or gear arrangement as known in the art may be employed to effect the desired movement of the locking elements between a retracted release position and a protruding locking position. Accordingly, a spring mechanism may involve a spring extending in the axial direction of the fixing device and being arranged to directly or indirectly cause a locking element to move between the different positions, as disclosed hereinafter or the spring mechanism may involve a radially compressible spring acting directly or indirectly on the locking element or locking elements. A spring actuated release/locking mechanism will generally be responsive to a force applied in the axial direction of the fixing device, such as a pushing or pulling force, although rotational forces may also be involved.

Alternatively or in addition thereto, the releasable locking means may comprise a manually actuated release mechanism arranged to move one or more locking elements such as a locking pin or a locking groove between a release position and a fixing position. By a manually actuated locking/release mechanism is implied a mechanism without intermediate actuating members such as springs or gears. The manually actuated lockable/releasable mechanisms may be of any kind known in the art such a key/bolt, a bayonet-arrangement, etc. A manually actuated release/locking mechanism will generally be responsive to torsional forces or to a combination of a torsional force and a force applied in the axial direction of the fixing device.

A locking arrangement comprising a locking element which can be moved between an inner release position and an outer locking position may comprise an inner core part which is telescopically movable within an outer casing or an outer casing which is telescopically movable on an inner core part. The arrangement preferably comprises at least one spring, which is compressible in an axial direction of the fixing device. By axial compression of the compressible spring, the inner core part and the outer casing can be telescopically moved in relation to each other. At least one locking ball may rest in a guiding groove arranged in the core part or in the outer casing. The guiding groove has a deeper portion and a shallower portion and the locking ball moves from the shallower portion to the deeper portion when the spring is compressed. This means that as the locking ball moves along the guiding groove in the axial direction of the fixing device, it is simultaneously moved in the radial direction of the fixing device, causing the locking ball to be retracted into the fixing device. When the compressive force on the spring is released, the spring again expands and moves the core part or the outer casing back to a rest position at the same time as the locking ball moves to the shallow part of the guiding groove. When the first coupling portion of the fixing device takes the form of a plug portion having an inner core and an outer shell, the locking ball will partially protrude radially from the outer casing through a hole in the outer casing when the locking ball is in the locking position.

The releasable locking means preferably comprises a plurality of locking balls which are arranged to move in corresponding guiding grooves in the core part or the outer shell of the fixing device. In the case where the locking means comprises a plurality of locking balls, the locking balls are preferably arranged equidistantly around the periphery of the outer casing in the first coupling portion such as in a plug portion of the fixing device.

The releasable locking means may be arranged to be controlled by a push-button or other push-element which is placed at an outer end, i.e. at an end remote from the first coupling portion of the fixing device. Pressing the bush-button in the axial direction of a spring-actuated fixing device, causes the compressible spring or springs in the fixing device to be compressed and the inner core part of the fixing device to slide inside the outer casing at the same time allowing the locking balls to move in the guiding groove from the shallower portion into the deeper portion of the guiding groove. Alternatively, the releasable locking means may be arranged to respond to a pulling force applied to the outer end of the inner core part of the fixing device or to the outer casing of the fixing device. Furthermore, the releasable locking means may respond to a rotational force or to a combination of rotational and axial forces. In order to facilitate operation of the release/locking mechanism, the fixing element is preferably provided with a suitable control element such as a knob, a button, a handle, a grip on an outer casing, etc.

The fixing device may comprise means for tensioning of an anti-skid device which has been attached to the fixing device.

The means for tensioning of an anti-skid device may be coupled to or form part of the locking means or may be a part of the anti-skid device.

The first coupling portion of the fixing device may be a male coupling portion which is configured to be inserted into a corresponding female portion on a wheel rim, the female portion being fixedly arranged on the wheel rim and being axially aligned with the centre bore of the wheel rim or the female receiving portion being fully or partly constituted by the centre bore of the wheel rim. The male coupling portion may take the form of a plug portion of the fixing device; the plug portion being configured to fit into the centre bore of the wheel rim either directly or via an adapter device or being configured to fit into an adapter device carrying a female portion.

Alternatively, the first coupling portion of the fixing device may comprise a female coupling portion which is configured to be applied over a corresponding male coupling portion on a wheel rim, the male coupling portion being fixedly arranged on the wheel rim and being axially aligned with the centre bore of the wheel rim. The male coupling portion on the wheel rim may take any suitable form such as a rod or a tube. An adapter device may be used between the wheel rim and the fixing device to provide the wheel rim with the male coupling portion. The adapter device may be provided with locking elements which are arranged to mate with corresponding locking elements on the first/female coupling portion of the fixing device. An adapter device may take the form of a rod or a cylinder or may include a rod or a cylinder arranged on an adapter base. The base may be in the form of a disc or a multilimbed ring and may be provided with means for attaching the adapter to a wheel rim, such as bolt holes, or similar.

An adapter device may be used between the wheel rim and the fixing device to adjust the size of the centre bore in the wheel rim to the size of the male coupling portion of the fixing device and/or to provide the female receiving portion on the wheel rim with a sufficient depth to allow the male coupling portion of the fixing device to be securely anchored in the female portion on the wheel rim. The adapter device may be provided with locking elements which are arranged to mate with corresponding locking elements on the first/male coupling portion of the fixing device. An adapter device may take the form of a ring or a cylinder or may include a ring or a cylinder arranged on an adapter base. The base may, e.g., be in the form of a disc or a multilimbed ring and may be provided with means for attaching the adapter to a wheel rim, such as bolt holes, or similar.

Although other shapes may be used as set out herein, it may be preferred that male and female coupling portions on the fixing device and on the wheel rim have a mating circular or generally circular cross-section. By a generally circular cross-section is implied a cross-section which has the functionality of a circular cross-section, but which may comprise minor deviations from a perfect circular shape, such as indentations and grooves. Coupling portions having a circular or generally circular cross-section may have a cylindrical, conical or frusto-conical shape and are preferably configured to allow rotational movement between the mating coupling portions. It has been found that wear on the wheel rim at strong acceleration or deceleration may be reduced if the applied fixing device and an anti-skid device connected thereto is able to rotate in relation to the vehicle wheel.

As set out herein the second coupling portion may comprise a first connection element arranged to cooperate with a second connection element arranged on an anti-skid device for forming a coupling arrangement, the first connection element preferably being one of a groove, a hinge mounting, a pin, a screw thread or a locking rim.

In accordance with the invention, there is also offered an anti-skid device which is adapted for coupling to a fixing device as disclosed herein. The anti-skid device comprises a friction increasing member such as a snow chain and a coupling portion for coupling the anti-skid device to the fixing device.

The anti-skid device is arranged to be fixed to a wheel rim by means of a fixing device having a second coupling portion comprising a first connection element. The coupling part of the anti-skid device comprises a second connection element arranged to cooperate with the first connection element on the fixing device for forming a coupling between the anti-skid device and the fixing device, the second connection element being one of a pin, a hinge pin, a groove, a screw thread or a locking rim.

In accordance with the invention, there is also offered an anti-skid arrangement for a vehicle tyre. The anti-skid arrangement comprises a fixing device as disclosed herein and an anti-skid device as disclosed herein.

The coupling portion on the fixing device and the coupling portion on the anti-skid device may be arranged to be connected by means of mating connection elements provided on the fixing device and on the anti-skid device. The mating connection elements may be pre-connected by a manufacturer, implying that the anti-skid arrangement is delivered to a user as a complete assembly. Pre-assembled connection elements may be permanently coupled to each other. With a permanent coupling as used herein is implied a coupling which is intended to remain intact during use of the anti-skid arrangement as well as when it is not in use. A permanent coupling is commonly understood as being a coupling which cannot be broken without damaging or destroying the coupling elements.

Alternatively, the mating connection elements may be arranged to be connected by a user of the anti-skid arrangement at the time of use of the anti-skid arrangement. Such mating connection elements may include hooks and loops, snap-in or snap-on connectors, screw-connectors, slide in connectors, hinges, straps, etc. Combinations of different types of connectors may also be used.

The connection may be a screw connection with a screw-thread placed on a first coupling part being one of the mating connection elements and a pin on the second coupling part being the other mating connection element and being adapted to move in the screw-thread. The screw connection may comprise or constitute a means for tensioning of the anti-skid device when applied to a tyre.

The coupling portions on the fixing device and on the anti-skid device may alternatively be attached to each other by means of a hinge, such as a pre-connected hinge or a hinge which is assembled by a user. The hinge connection may also be arranged to tension the anti-skid device when applied to a tyre.

The anti-skid arrangement may be provided with a handle which is directly or indirectly attached to one of the mating connection elements on the fixing device and on the anti-skid device. The handle is arranged for manipulation of the mating connection elements between at least two different and distinct positions. Such different positions may be a decoupling position and a coupling position and/or may be a tightening position and a loosening position. The term "handle" is used herein in a broad sense to imply any grippable member that may be used to operate or control the parts of the coupling arrangement.

On a screw connection, a handle may be arranged on an outer screw-on fastener element having an inner thread, e.g. a screw-nut, and may extend radially from the outer fastener element to allow the fastener element to be screwed onto a fastener element having an outer thread, e.g. a screw-bolt or a fastener element having a pin or other protruding element that can engage with the inner thread on the screw-on fastener element.

On a hinge connection, the handle may be in the form of a lever which can be operated to move the connection between the different positions, as disclosed herein.

There is also provided a wheel rim for use together with a fixing device and an anti-skid device as disclosed herein. The wheel rim is adapted to receive and retain the fixing device as disclosed herein and has a centre bore. The wheel rim comprises a coupling element which is adapted to cooperate with the first coupling portion on the fixing device. The coupling element on the wheel rim is axially aligned with the centre bore of the wheel rim and is arranged to protrude from a side of the wheel rim which is facing outward when the wheel rim is mounted on a wheel axle. The wheel rim further comprises one or more locking elements which are adapted to cooperate with locking one or more locking elements on the fixing device for coupling the fixing device to the wheel rim at the centre bore of the wheel rim.

The wheel rim may alternatively have a centre bore which is adapted to receive and retain a fixing device as disclosed herein. In that case, the centre bore has a diameter exceeding the diameter of the first coupling portion of the fixing device. The centre bore has an inner rim or groove or other element for engaging with the locking means on the plug portion of the fixing device. The inner diameter of the centre bore may be uniform along the length of the centre bore or may change e.g. forming a restriction or a dilatation which may engage with a locking element on the first coupling portion of the fixing device. Although a cylindrical shape may be preferred for the inner bore in the wheel rim, other shapes such as polygonal, oval, star-shapes, etc. may be used with a matching shape and size of the plug portion of the fixing device.

The coupling member and/or the locking means on the wheel rim may be provided on an adapter device, which adapter device is attached to the wheel rim with the coupling element being axially aligned with the centre bore of the wheel rim such that the attached adapter device forms part of the wheel rim.

Alternatively, the coupling member and/or the locking means on the wheel rim are formed integrally with the wheel rim.

The invention further relates to an adapter device comprising a coupling portion which is configured to mate with a corresponding first coupling portion on a fixing device as disclosed herein and which is arranged to be attached to a wheel rim having a centre bore such that the coupling portion of the adapter device is axially aligned with the centre bore of the wheel rim.

The adapter device may be attached to the wheel rim by means of a permanent attachment such as by welding or by rivets.

The adapter device may comprise holes, which holes are positioned in locations on the adapter device corresponding to wheel bolt positions on the wheel rim. The adapter device is thereby arranged to be attached to the wheel rim by means of the wheel bolts. The adapter device may have holes arranged to fit with wheel rims having different numbers of bolt positions, such as 4 or 5 wheel bolt positions.

In order to allow for the fixing device and an anti-skid device connected to the fixing device to be able to rotate in relation to a wheel on which the anti-skid arrangement is applied, abutting surfaces in the coupling between the fixing device and the wheel rim may consist of a friction-reducing material such as nylon or other plastic material. Such abutting surfaces may be the inner surface of the centre bore of the wheel rim and/or a surface on the first coupling portion on the fixing device and/or on an adaptor device. A certain degree of free-wheeling of the fixing device and an anti-skid device connected thereto may be desired to reduce wear on the rim at strong acceleration or deceleration.

The invention also involves a method for mounting an anti-skid device on a vehicle wheel, comprising the steps of:
a) providing a fixing device as disclosed herein,
b) providing an anti-skid device as disclosed herein,
c) providing a vehicle wheel having a wheel rim with a centre bore,
d) connecting the second coupling portion of the fixing device with the coupling portion of the anti-skid device,
e) coupling the first coupling portion of the fixing device at the centre bore of the wheel rim and ascertaining that the releasable locking means is in a locked position,
f) tensioning the anti-skid device on the vehicle wheel; and
wherein step d) may be performed before step e) or step e) may be performed before step d).

### BRIEF DESCRIPTION OF THE DRAWINGS

The invention will now be described in greater detail with reference to the figures shown on the appended drawings. In the drawings
- Fig. 1: shows a fixing device with a male coupling portion for fitting in a female coupling portion on a wheel rim with the fixing device in a first position,
- Fig. 2: shows a fixing device with a male coupling portion for fitting in a female coupling portion on a wheel rim with the fixing device in a second position,
- Fig. 3: shows a section through the fixing device in Fig. 1 taken along the line III-III,
- Fig. 4: shows a section through the fixing device in Fig. 2 taken along the line IV-IV,
- Fig. 5: shows the fixing device in Figs. 1-4 while being inserted in a centre bore in a wheel rim,
- Fig. 6: shows a detail view of a center hole in a wheel rim,
- Fig. 7: shows the fixing device in Figs. 1-4 inserted in a centre bore in a wheel rim,
- Fig. 8: shows a wheel with an anti-skid arrangement mounted on the wheel,
- Fig. 9: shows a coupling arrangement between the fixing device and the anti-skid device in Fig. 8 in a first coupling position,
- Fig. 10: shows the coupling arrangement in Fig. 9 in a second coupling position,
- Fig. 11: shows an outer casing of the fixing device in the anti-skid arrangement in Fig. 8,
- Fig. 12: shows a wheel with an anti-skid arrangement mounted on the wheel,
- Fig. 13: shows a coupling arrangement between the fixing device and the anti-skid device in Fig. 12 in a first coupling position,
- Fig. 14: shows the coupling arrangement in Fig. 9 in a second coupling position,
- Fig. 15: shows the fixing device in the anti-skid arrangement in Fig. 12,
- Fig. 16: shows the fixing device in Figs. 1-4 while being inserted in a female coupling portion on a wheel rim,
- Fig. 17: shows the fixing device in Figs. 1-4 while being inserted in a female coupling portion provided on an adapter device,
- Figs. 18a-18c: show a fixing device with a female coupling portion for fitting on a male coupling portion of a wheel rim,
- Fig. 19: shows the fixing device in Figs. 18a-18c while being applied to a male coupling portion on a first type of wheel rim,
- Fig. 20: shows a detail of the male coupling portion on the wheel rim in Fig. 19,
- Fig. 21: shows the fixing device in Figs. 18a-18c after having been applied to the wheel rim in Fig. 19; and
- Fig. 22: shows the fixing device in Figs. 18a-18c while being applied to a male coupling portion on a second type of wheel rim.

### DETAILED DESCRIPTION

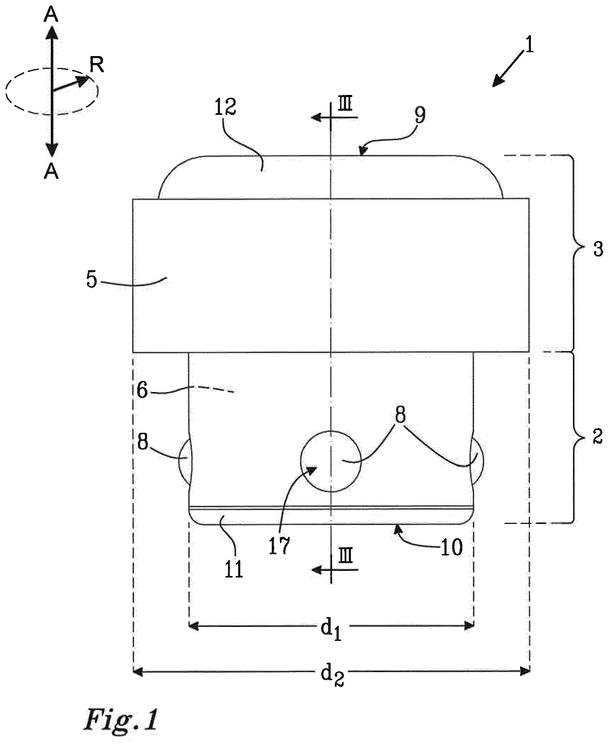

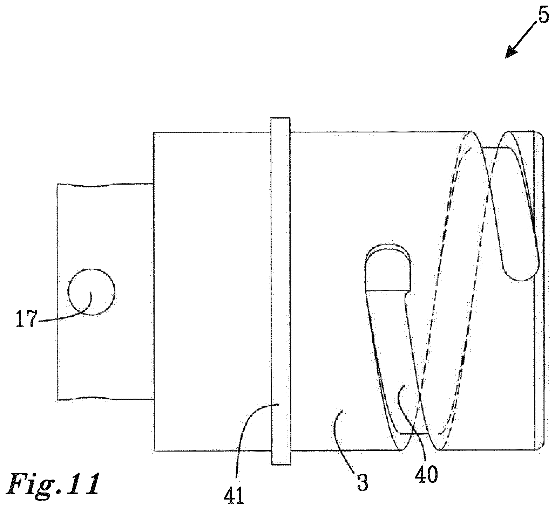

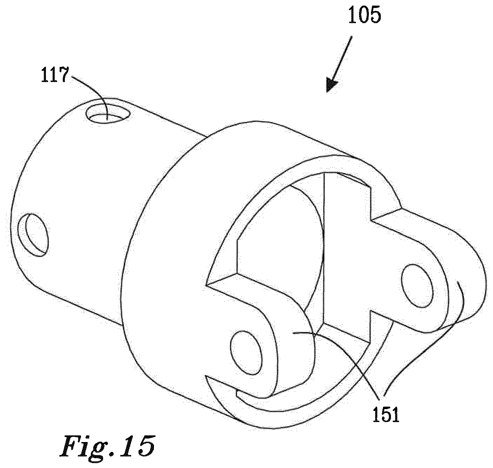

With reference to Figs. 1-4, there is shown a fixing device 1 for fixing an anti-skid device such as a snow chain to a wheel rim. The fixing device may be used on any type of wheel rim, including aluminum rims and steel rims. Although other shapes may be used for the fixing device, as disclosed herein, the fixing device 1 is representatively shown in the drawings as having a generally cylindrical shape with an axial direction A and a radial direction R, perpendicular to the axial direction A. The fixing device 1 can be divided into two major portions in the axial direction A; an inner plug portion 2 constituting a first coupling portion 2 at an inner end of the fixing device 1 and a second, outer, coupling portion 3 at the opposite, outer end of the fixing device 1. The plug portion 2 is a male coupling portion and is sized and configured for fitting into a centre bore in a corresponding wheel rim and is shown with a first diameter d₁ which is selected to be smaller than the diameter of the center bore in the wheel rim. When the fixing device is inserted into the centre bore in the wheel rim, the second coupling portion 3 protrudes from the wheel rim and is accessible for attachment of an anti-skid device thereto. The second coupling portion 3 in Figs. 1-4 is shown with a second diameter d₂, which is larger than the first diameter d₁. The second coupling portion 3 is shown in Figs. 1-4 in its simplest form and it is to be understood that the second coupling portion 3 may be provided with specifically designed coupling elements as exemplified in Figs. 11 and 15.

The main components of the fixing device 1 in Figs. 1-4 are an outer casing 5, an inner core 6, two compressible springs 7 and four locking balls 8. The compressible springs 7 and the locking balls 8 form part of a locking/release mechanism as disclosed herein. It is to be understood that a fixing device 1 of the invention should not be considered to be limited to a locking/release mechanism of this kind but that any other suitable locking/release mechanism could be used instead, as set out herein.

The number of compressible springs and locking balls shown in the figures should not be considered limiting to the invention. Accordingly, the fixing device may comprise only one compressible spring or more than two compressible springs, such as three or four compressible springs. Likewise, only a single locking ball may be used although it is generally preferred to use a plurality of locking balls.

By a compressible spring is meant any member that can be compressed and that will spring back to its non-compressed state when the compression force is released. The compressible springs 7 in the fixing device 1 are compressible in the axial direction A of the fixing device 1.

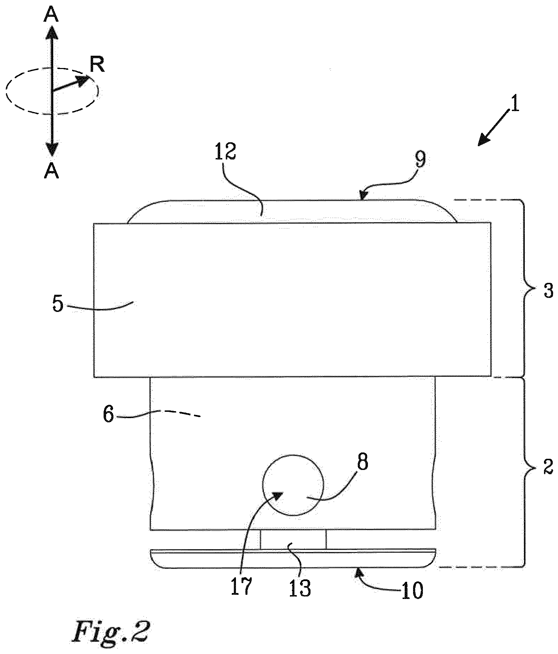

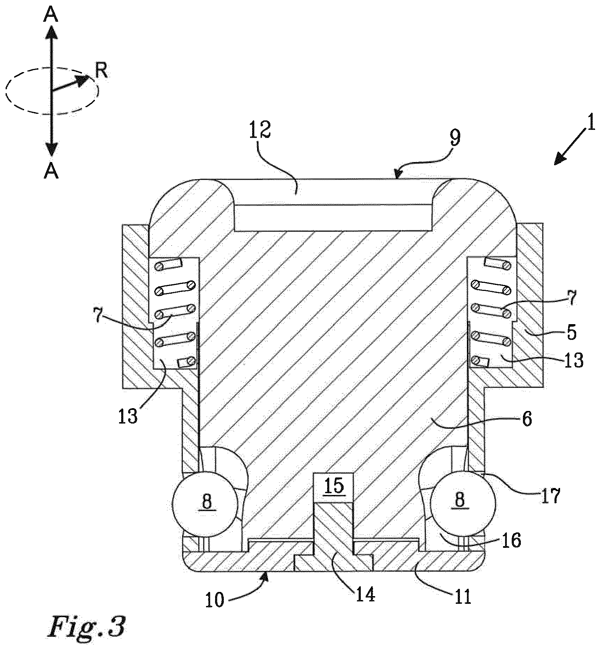

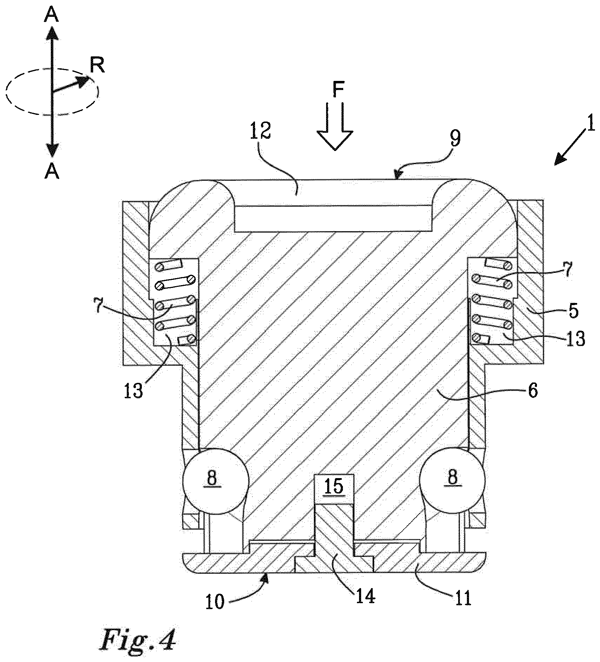

The inner core 6 is arranged inside the outer casing 5 and is telescopically movable in relation to the outer casing 5 between the positions shown in Figs 1 and 3 and in Figs. 2 and 4.

The fixing device 1 has an outer end surface 9 on the second coupling portion 3 and an inner end surface 10 on the plug portion 2. The outer end surface 9 is formed by a part of the inner core 6 which protrudes out of the outer casing 5. The protruding part of the outer casing constitutes a push-button 12 for pushing the inner part 6 in a direction towards the inner end surface 10 of the fixing device 1. The push-button 12 may be formed as an integral part of the inner core 5 or may be formed separately and be subsequently attached to the remaining part of the inner core.

A cavity 13 is formed between the inner core 6 and the outer casing 5 in the widened portion of the fixing device 1 which is proximate to the outer end surface 9, i.e. in the second coupling portion 3 of the fixing device 1. The compressible springs 7 are arranged in the cavity 13 such that they are prevented from moving out of position and with a principal extension in the axial direction A of the fixing device within the cavity 13. The cavity 13 may be a continuous cavity extending around the periphery of the inner core 6 as shown in the figures or may be separate cavities for each individual spring. The ends of the compressible springs 7 are preferably anchored to the inner core 6 and the outer cover 5. Such anchoring may be provided by sockets formed in the outer casing 5 and in the inner core at the ends of the cavity 13 or by any suitable attachment means known to the person skilled in the art such as gluing or welding.

The inner end surface 10 of the fixing device is formed by a bottom plate 11 which is attached to the inner core 6 with a pin 14 which is slidably arranged in a bore 15 in the inner core 6. The diameter of the bottom plate 11 is slightly larger than the diameter of the inner core 6 and matches the diameter of the outer casing 5, thus constituting a stopping member preventing the outer casing 5 from moving axially past the bottom plate 11.

As best seen in Figs. 3 and 4, the locking balls 8 rest in guiding grooves 16 which are arranged in the inner core 6 and extend in the axial direction, A. The guiding grooves 16 have a deep portion at an end remote from the inner end surface 10 of the fixing device 1 and a shallow portion proximal to the inner surface 10 of the fixing device. The terms "deep" and "shallow" are used herein as relative terms to indicate a difference in depth of different parts of the guiding grooves 16 along their axial extension. The locking balls may move in the guiding grooves 16 between the shallow portion and the deep portion. As the locking balls travel along the guiding grooves 16 in the axial direction, A, of the fixing device 1, they are simultaneously moved in the radial direction, R, of the fixing device, causing the locking balls 8 to be retracted into the fixing device 1 when they are located in the deep portions of the grooves 16 and to protrude out through holes 17 in the wall of the outer casing 5 when they are located in the shallow portions of the grooves 16.

The fixing device is operated by applying a compressive force F on the push-button 12 whereby the inner core 6 is moved in the axial direction A in relation to the outer casing 5. The movement causes the size of the cavity 13 with the compressible springs 7 to decrease in the axial direction, A, and the compressible springs 7 to be compressed. As shown in fig. 4, application of a compressive force F on the push-button 12 moves the locking balls 8 into the deep portions of the guiding grooves 16 where they are retracted into the fixing device. This position of the locking balls 8 constitute an application/release position for the fixing device allowing the fixing device to be inserted into or removed from a centre bore in a wheel rim.

When the compressive force F acting on the compressible springs 7 is released, the springs 7 expand and move the inner core 6 back to the rest position shown in Figs. 1 and 3 at the same time as the locking balls 8 return to the shallow parts of the guiding grooves 16 where they partially protrude from the outer casing 5 through the corresponding holes 17 in the outer casing 5. The rest position constitutes a locking position for the fixing device 1 in which the protruding locking balls 8 may be used for engaging with a corresponding locking member in the centre bore of a wheel rim.

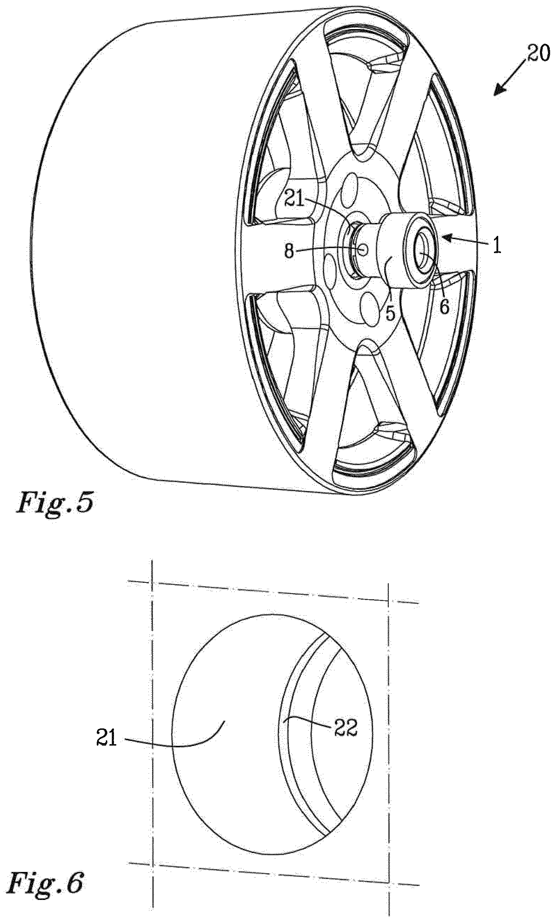

With reference to Fig. 5, there is shown a wheel rim 20 with a centre bore 21 and a fixing device 1. The fixing device 1 is shown as it appears while being inserted into the centre bore 2. Accordingly, the fixing device 1 is in the application/release position with the inner core 6 pushed into the outer casing 5 such that the locking balls 8 are retracted into the fixing device.

Fig. 6 shows a detailed view of the centre bore 21 in the wheel rim 20 seen from the inside surface of the wheel rim 20 which is the side of the wheel rim 20 that is facing towards the vehicle and which is opposite to the visible outside surface of the wheel rim 20. The centre bore 21 is shown to have a locking member 22 in the form of a circumferentially extending locking groove 22 which is arranged to engage with the locking balls 8 on the fixing device 1 when securing the fixing device 1 in the centre bore 21 of the wheel rim 20. The outer casing 5 of the fixing device may consist of a friction-reducing material such as nylon or other plastic material in order to reduce friction between the wheel rim 20 and the fixing device 1 and to allow a certain degree of free-wheeling between the fixing device 1 and the wheel rim.

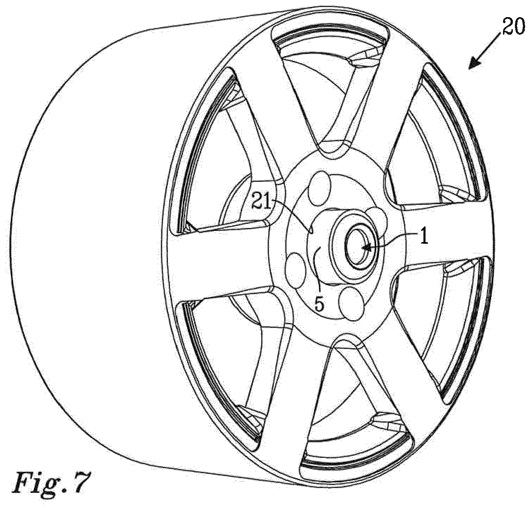

Fig. 7 shows the fixing device 1 after it has been inserted into the centre bore 21 in the wheel rim 20 and with the fixing device 1 in the locking position with the locking balls 8 protruding out through the openings 17 in the outer casing 5 of the fixing device 1 and engaging with the locking groove 22 inside the centre bore 21 of the wheel rim 20.

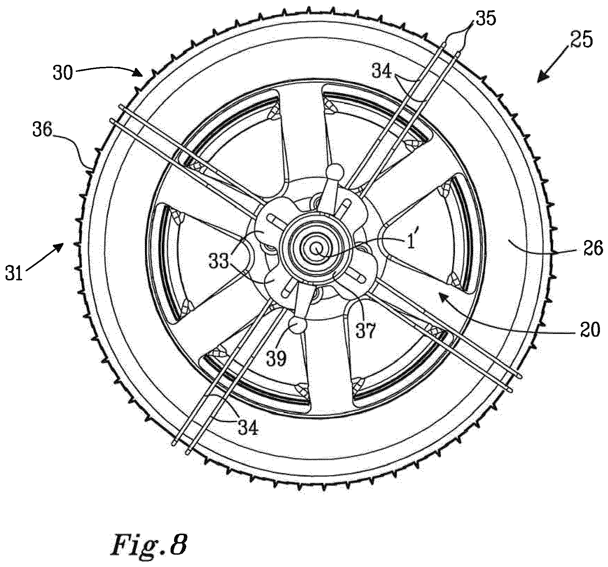

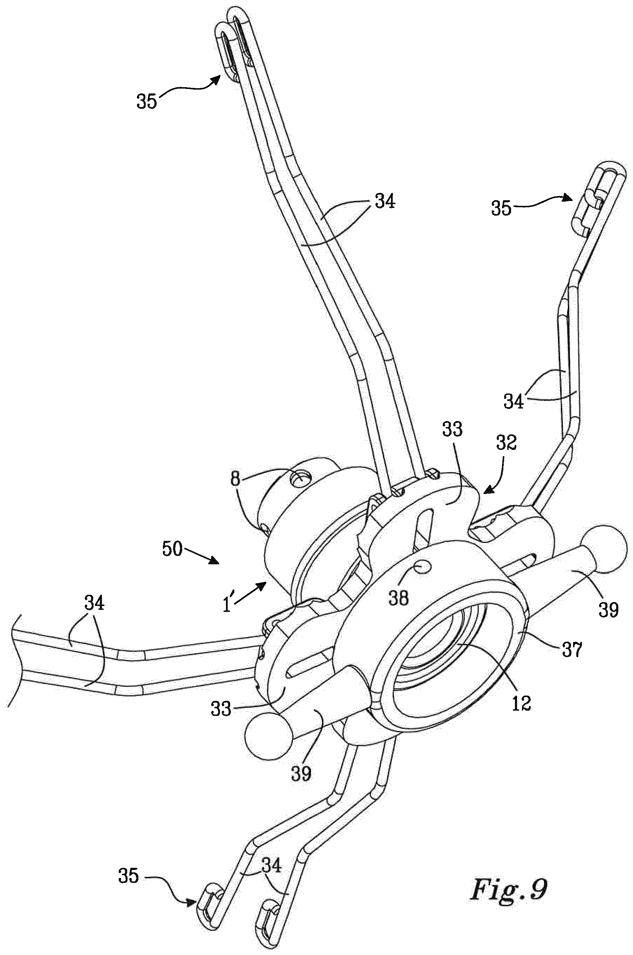

With reference to Fig. 8 there is shown a wheel 25 with an anti-skid arrangement 30 applied and fastened to the outwardly facing surface of the wheel 25 by means of a fixing device 1' in accordance with the invention. The wheel 25 comprises a wheel rim 20 in accordance with the invention and a tyre 26 mounted on the wheel rim 20. The anti-skid arrangement 30 comprises an anti-skid device 31 including a friction-increasing member 36 such as a snow chain. The anti-skid device 31 further comprises a carrier plate 32 with a central hole and four radially extending lobes 33 which provide attachment sites for radially extending connecting members in the form of spokes 34 which connect the carrier plate 32 with the friction-increasing member 36. The spokes 34 are representatively shown in the figures as each consisting of a pair of suitably shaped metal rods. As best seen in Fig. 9, the spokes 34 are illustrated with a bent profile, which may be beneficial when fitting and tightening the anti-skid device 31 on the vehicle wheel 25. It is to be understood that other configurations of the connecting members may be used such as single rods or bands or differently shaped connecting members 34. The number of connecting members 34 may also be different from that shown in the figures. Accordingly, the carrier plate 32 may carry fewer attachment sites for connecting members or more attachment sites for connection members.

The outer ends 35 of the spokes 34 are connected to the friction-increasing member 36 which is disposed on the thread of the tyre 26. The friction-increasing member 36 may be any commonly available friction-increasing device which allows mounting from the outside of the wheel 25. One non-limiting example of such friction-increasing device which is connected to radially extending spokes is disclosed in EP 2 050 590 A1.

However it is to be understood that connection between the friction-increasing member and the fixing device may be provided by a completely different connection arrangement, such as a knob or hub.

The anti-skid device further comprises a tensioning ring 37 having a pin 38 arranged on the inner wall of the tensioning ring 37 and having two handles extending radially outward from the outer wall of the tensioning ring 37.

The anti-skid device 31 in Fig. 8 is attached to the fixing device 1' by means of a screw coupling which also constitutes a tensioning means that serves to tighten the anti-skid device 31 on the wheel 25 by applying tension on the anti-skid device 31.

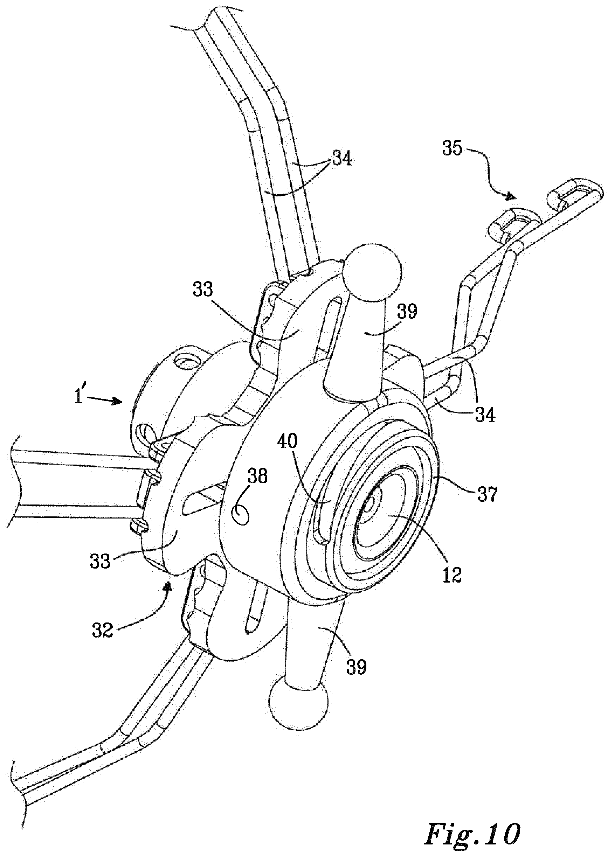

Figs. 9 and 10 show the coupling 50 between the fixing device 1' and the anti-skid device 31 on the wheel in Fig. 8 in closer detail. The coupling portion 3 of the fixing device is provided with a screw-thread 40 which engages with the pin 38 on the inner wall of the tensioning ring 37 enabling the tensioning ring to be screwed onto the second coupling portion 3 of the fixing device 1'. The configuration of the screw-thread is best illustrated in Fig. 11 which shows the outer casing 5 of the fixing device 1' of the coupling arrangement in Fig. 8. By using the handles 39 to rotate the tensioning ring 37 clock-wise, the tensioning ring 37 is screwed inward on the fixing device 1 from the position shown in Fig. 9 to the position shown in Fig. 10.

As seen in Fig. 11, the outer casing 5 of the fixing device 1' is provided with a peripheral rim or ledge 41. In the assembled anti-skid arrangement 30, the carrier plate 32 and the tightening ring are mounted on the fixing device 1' in a stacked configuration with the carrier plate 32 positioned innermost between the ledge 41 and the tightening ring 37. The ledge 41 on the fixing device 1' thus acts as a stop for the carrier plate 32, preventing axial movement of the carrier plate 32 past the ledge 41.

When the tensioning ring 37 is screwed inward on the fixing device 1' it brings the carrier plate 32 into abutment with the ledge 41 on the fixing device 1'. This means that when the anti-skid arrangement 30 is applied to a wheel 25 as shown in Fig. 8, clockwise rotation of the tensioning ring 37 will cause the anti-skid device 31 to be tightened on the wheel 25. The tightened position of the anti-skid device 31 is shown in Fig. 10. Anti-clockwise rotation of the tightening ring 37 causes the tightening ring 37 to be screwed outward to the position shown in Fig. 9 and brings the anti-skid device 31 into a loosened position.

The screw-on anti-skid arrangement 30 which is shown in Figs. 8-10 has been pre-assembled by a manufacturer. However, it is to be understood that the anti-skid arrangement 30 may be modified to allow assembly and disassembly by a user.

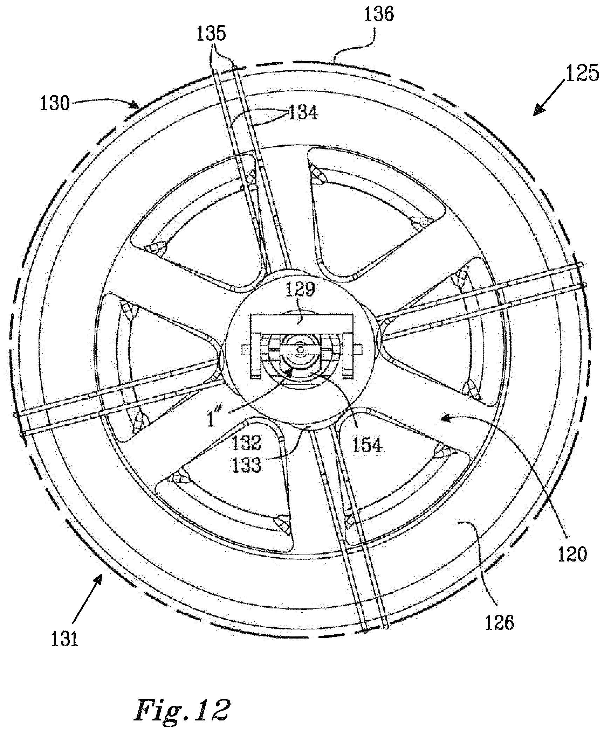

With reference to Fig. 12 there is shown a wheel 125 with an anti-skid arrangement 130 applied and fastened to the outwardly facing surface of the wheel 125 by means of a fixing device 101 in accordance with the invention. The wheel 125 comprises a wheel rim 120 in accordance with the invention and a tyre 126 mounted on the wheel rim 120. The anti-skid arrangement 130 comprises an anti-skid device 131 similar to that in Fig. 8 and including a friction-increasing member 136 such as a snow chain. The anti-skid device 131 further comprises a carrier plate 132 with a central hole and four radially extending lobes 133 which provide attachment sites for radially extending connecting members in the form of spokes 134 which connect the carrier plate 132 with the friction-increasing member 136. As in Fig. 8, the spokes 134 are illustrated in the figures as each consisting of a pair of suitably shaped metal rods although other configurations may be used, as set out herein.

The outer ends 135 of the spokes 134 are connected to the friction-increasing member 136 which is disposed on the thread of the tyre 126. The friction-increasing member 136 may be any commonly available friction-increasing device which allows mounting from the outside of the wheel 125.

The anti-skid device 131 on the wheel in Fig. 12 differs from the anti-skid device in Fig. 8 in that it is attached to the fixing device 101 by means of a hinge coupling 150. A similarity is that the hinge coupling also constitutes a tensioning means that serves to tighten the anti-skid device 131 on the wheel 125 by applying tension on the anti-skid device 131.

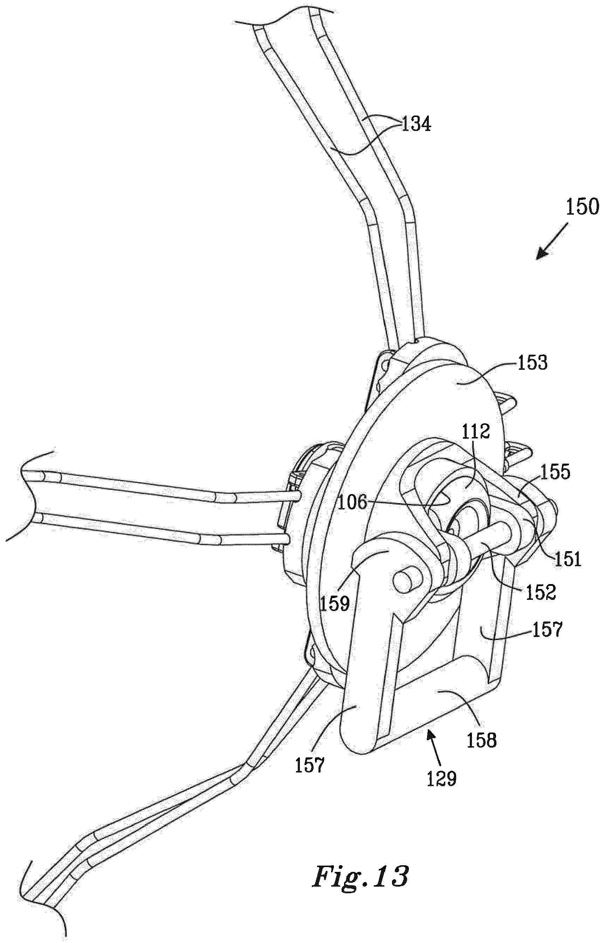

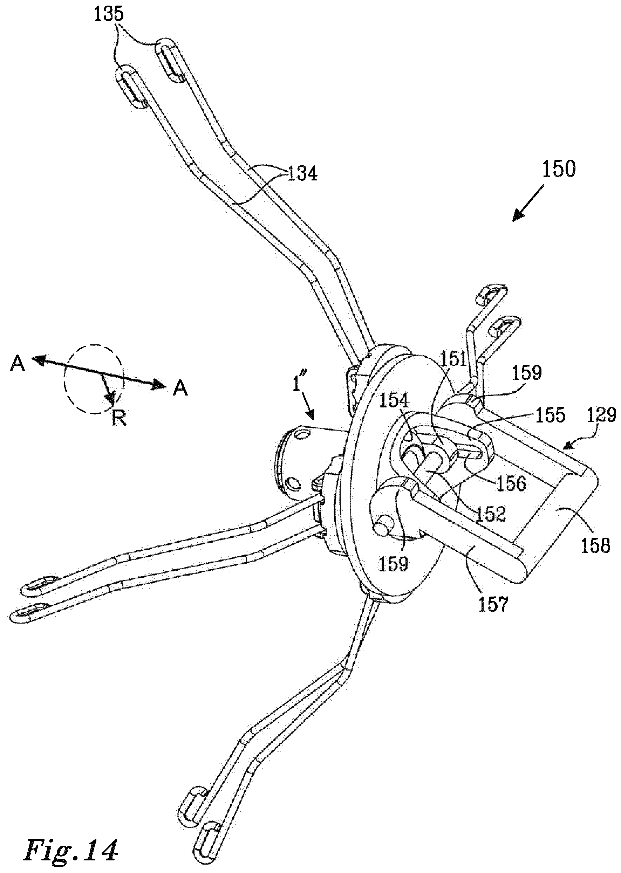

Figs. 13 and 14 show the coupling between the fixing device 1" and the anti-skid device 131 on the wheel in Fig. 12 in closer detail.

The coupling portion 103 of the fixing device 1" is provided with first hinge mountings 151 through which a hinge pin 152 is inserted The configuration of the coupling portion 103 of the fixing device 1" is best illustrated in Fig. 15 which shows the outer casing 105 of the fixing device 1" of the coupling arrangement 150 in Figs. 12-14. As seen in Fig. 15, the hinge mountings 151 are arranged diametrically opposite each other at the outer end 109 of the outer casing 105 of the fixing device 101.

The anti-skid device 131 further comprises a tightening plate 153 and a handle 129. The tightening plate 153 has a central hole 154 and second hinge mountings 155 arranged diametrically opposite each other at the periphery of the central hole 154 and through which the hinge pin 152 is inserted. The distance between the second hinge mountings 155 is greater than the distance between the first hinge mountings 151 which means that the second hinge mountings 155 are located outward of the first hinge mountings on the hinge pin 152 as seen in Figs. 13 and 14. The hinge pin 152 is inserted into the second hinge mountings 155 through elongated openings 156 which extend in the axial direction A of the coupling arrangement 150. The elongated openings 156 allow movement of the hinge pin 152 between an inner tensioning position and an outer loosened position. The tensioning position is shown in Fig. 13 and the loosened position is shown in Fig. 14.

A further element in the form of a handle 129 is mounted on the hinge pin 152. The handle comprises two parallel arms 157 arranged on either side of the hinge mountings 151, 155 and being connected by a gripping element 158 at the outer end of the handle 129. Each of the parallel arms 157 of the handle 129 has a cam surface 159 which abuts the tightening plate 153.

In the assembled anti-skid arrangement 130, the carrier plate 132 and the tightening plate 153 are mounted on the fixing device 101 in a stacked configuration with the carrier plate 132 positioned inward of the tightening plate 153.

With reference to Fig. 13, the handle 129 is shown in a folded down position, with the parallel arms 157 arranged perpendicular to the axial direction A of the coupling arrangement. In this position, the cam surfaces 159 at the ends of the arms 157 have moved the hinge pin 152 to the outer position in the elongated openings 156 in the second hinge mountings 155. In this position the hinge pin 152 is moved away from the outer surface 109 of the fixing device 1" and the push-button 112 at the outer end of the inner core 106 of the fixing device 1" is unaffected by the hinge pin 152. This means that the locking balls 108 (not visible in Fig. 13) are in the locking position.

By raising the handle 129 from the surface of the tightening plate 153, the cam surfaces 159 at the ends of the handle arms 157 causes the hinge pin 152 to be moved to the inner position in the elongated openings 156 and to press the push-button 112 to the application/release position as disclosed herein.

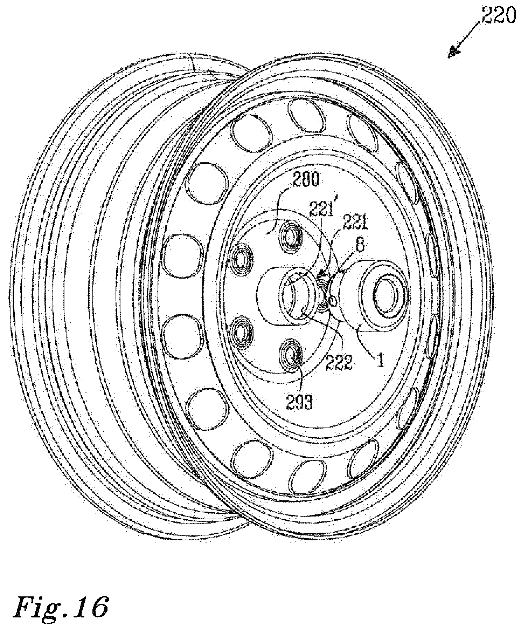

Fig. 16 shows a fixing device 1 as described in relation to Figs. 1-4 while being inserted in a female coupling portion 221 on a wheel rim 220, such as a steel wheel rim. The wheel rim 220 in Fig. 16 has a central, disc-shaped portion 280 surrounding the centre bore 221' which central portion is considerably thinner than the central portion of the wheel rim 20 shown in Fig. 5. This means that the depth of the centre bore 221' in the wheel rim 220 in Fig. 16 is insufficient for allowing a fixing device as shown in Figs. 1-4 to be securely anchored in the centre bore 221'. The female coupling portion 221 on the wheel rim 220 is shown in the form of a cylinder protruding from the wheel rim 220 at the centre thereof and being axially aligned with the centre bore 221' in the wheel rim 220. In the example shown in Fig. 16, the female coupling portion 221 is shown to have the same inner diameter as the centre bore 221' in the wheel rim 220. It is to be understood that the inner diameter of the female coupling portion 221 on the wheel rim 220 could have a diameter which is larger or smaller than the diameter of the centre bore 221' in the wheel rim 220.

The female coupling portion 221 on the wheel rim 220 may have been permanently attached to the wheel rim 220 on the portion 280 surrounding the centre bore 221' or inside the centre bore 221' by any suitable method such as welding or may be integrally formed with the wheel rim 220. It is further conceivable that the female coupling portion 221 is provided as an adapter device which can be permanently or removably attached to the wheel rim 220 such that it is aligned with the centre bore 221'.

The female coupling portion 221 is provided a locking member 222 in the form of a circumferentially extending locking groove 222 on the inner surface of the female coupling portion and which is arranged to engage with the locking balls 8 on the fixing device 1 when securing the fixing device 1 at the centre bore 221' of the wheel rim 220 in a manner analogous to that described in relation to Figs. 5 and 7.

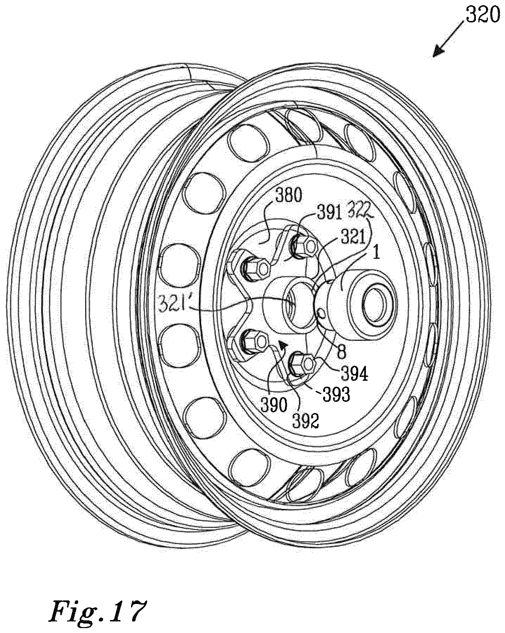

In Fig. 17 is shown a wheel rim 320 of the same type as the wheel rim 220 in Fig. 16 together with a fixing device as shown in Figs. 1-4 while being inserted in a female coupling portion 321 which is provided on an adapter device 390 mounted on the wheel rim 320.

The adapter device 390 shown in Fig. 17 has a coupling portion 321 in the form of a cylinder having an internal locking groove 322 and being arranged on an adapter base 391. The adapter base 391 is exemplified as a multi-limbed ring which is provided with bolt holes 392 positioned at the ends of the limbs of the multi-limbed ring. The bolt holes 392 in the adapter base 391 correspond to the locations of the wheel bolt holes 393 in the wheel rim 320. The adapter base 391 carrying the coupling portion 321 is bolted to the wheel rim 320 by means of wheel bolts 394 which are inserted through the bolt holes 392 in the adapter base 391 and through the wheel bolt holes 393 in the wheel rim 320.

As seen in Fig. 17 the adapter device 390 is attached to the wheel rim 320 with the coupling portion 321 being axially aligned with the centre bore 321' of the wheel rim 320, such that the attached adapter device 392 forms part of the wheel rim.

An adapter device for mounting a coupling portion on a wheel rim or for adapting a centre bore on a wheel rim to a fixing device according to the invention may take the form of a ring or a cylinder or may include a ring or a cylinder arranged on an adapter base. An adapter base may take any suitable form apart from the illustrated multilimbed ring, such as a disc or a star-shape and may be provided with other means than the shown bolt holes for attaching the adapter to a wheel rim. By way of example, an adapter base may be clamped, welded or attached with rivets to the wheel rim.

The adapter device may be provided with bolt holes corresponding to locations wheel bolt positions on a wheel rim having 5 wheel bolt holes 393, such as the wheel rims 220, 320, 420 shown in Figs. 16, 17, 19 and 21 or having 4 wheel bolt holes on the wheel rim, such as shown in Figs. 5, 7 and 22, or to any number of wheel bolt holes provided on a wheel rim. Furthermore, the adapter device may be provided with bolt holes which are distributed such that the adapter device may be used at least on a wheel rim having 4 wheel bolt positions or on a wheel rim having 5 wheel bolt position.

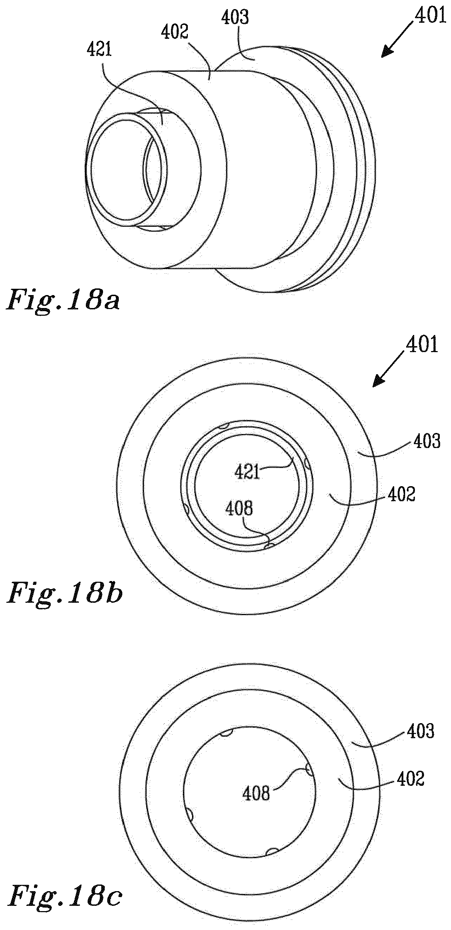

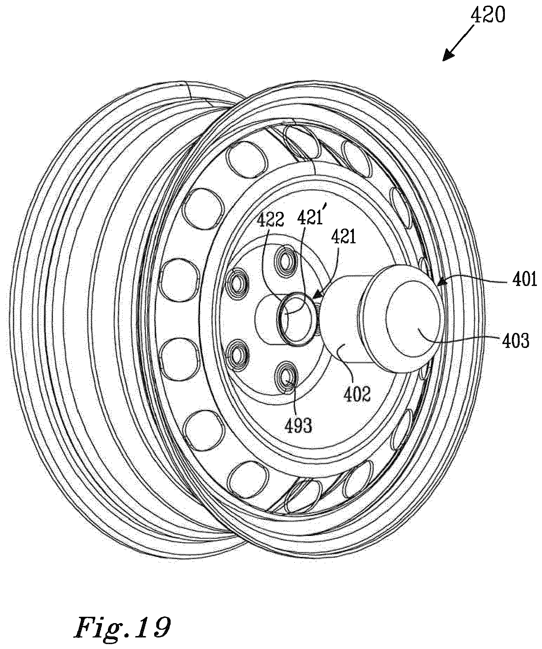

Figs. 18a-18c is a schematic illustration of a fixing device 401 for fixing an anti-skid device such as a snow chain to a wheel rim. Like the fixing device 1 in Figs. 1-4, the fixing device 401 may be used on any type of wheel rim, including aluminum rims and steel rims, with or without an adapter device, as found suitable. The fixing device 401 has a female first coupling portion 402 which is arranged to be fitted and fastened on a male coupling portion 421 of a wheel rim, such as the wheel rim 420, 520 shown in Figs. 19, 21 and 22. Only the male coupling portion 421 of the wheel rim is indicated in Figs. 18a and 18b.

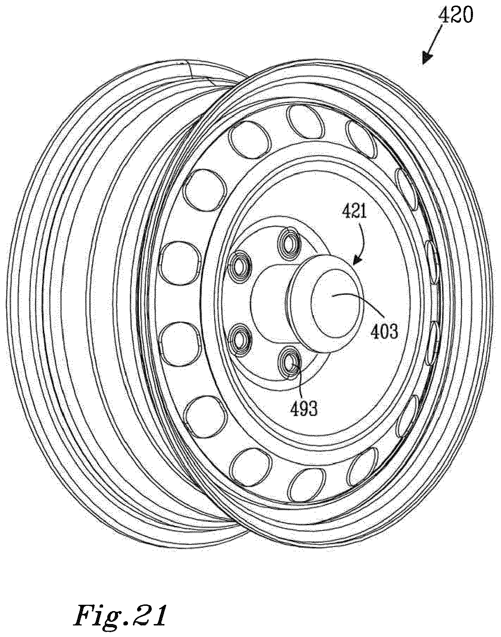

The fixing device 401 is representatively shown in the drawings as having a generally cylindrical shape and can be divided into two major portions in the axial direction of the fixing device 401. Accordingly, a first, tubular coupling portion 402 is provided at an inner end of the fixing device 401 and a second, outer, coupling portion 403 is found at the opposite, outer end of the fixing device 401. The first coupling portion 402 is a female coupling portion and is sized and configured for fitting over the male coupling portion 421 on the wheel rim 420, 520. The first coupling portion 402 of the fixing device 401 in Figs. 18a-18c has an inner diameter which is selected to be larger than the outer diameter of the male coupling portion 421 on the wheel rim 420, 520. When the fixing device fitted on the male coupling portion 421 on the wheel rim 420, 520, the second coupling portion 403 protrudes from the wheel rim 420 as shown in Fig. 21 and is accessible for attachment of an anti-skid device thereto. The second coupling portion 403 in Figs. 18a-18c is shown with an outer diameter, which is larger than the outer diameter of the first coupling portion 402 of the fixing device 401, whereby the second coupling portion 403 forms a knob at the outer end of the fixing device 401. The second coupling portion 403 is shown in Figs. 18a-18c in a simplified form and it is to be understood that the second coupling portion 403 may be provided with specifically designed coupling elements as exemplified in Figs. 11 and 15.

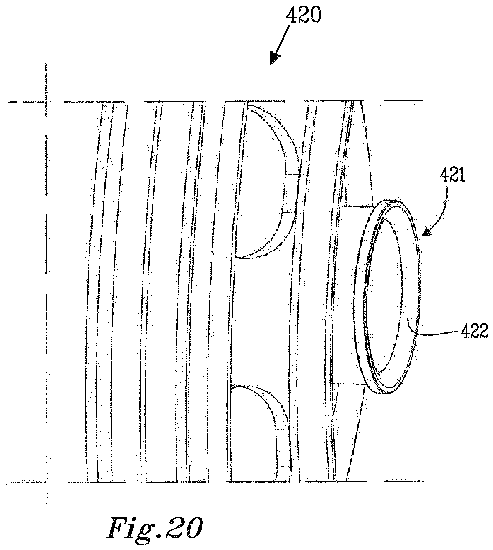

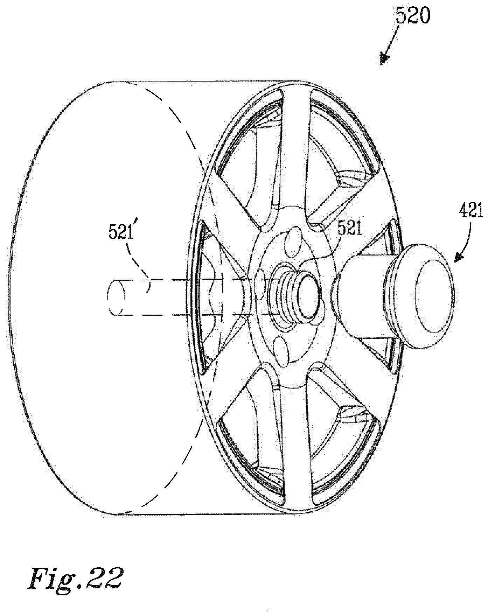

A male fixing device of the type shown in Figs. 18a-18c may be provided with and internal locking/release mechanism arranged inside the fixing device 401 and corresponding to the locking/release mechanism provided in the interior of the fixing device 1 shown in Figs. The interior locking mechanism may comprise one or more locking elements such as one or more locking balls 408 which in a locking position protrudes from the inner wall of the female first coupling portion 402, as shown in Figs. 18a-18c. A female fixing device 401 provided with locking balls 408 may be arranged to be fixed to a wheel rim having a male coupling portion 421, 521 by the locking balls 408 snapping over a locking element in the form of a locking rim 422 arranged at the end of the male coupling portion 421 on the wheel rim 420 as best shown in Fig. 20 or by snapping into a locking grove on a male coupling portion 521 as shown in Fig. 22.

A fixing device having a female first coupling portion as disclosed herein may be arranged to cooperate with a corresponding male coupling portion provided as a protrusion on the side of a wheel rim facing outward when the wheel rim is mounted on a wheel axle. The male coupling portion on the wheel rim may have any cross-section with a circular or substantially circular cross-section being preferred, as set out herein and may be arranged to cooperate with a mating female first coupling portion on a fixing device as disclosed herein.

The male and female coupling portions 21, 221, 321, 421, 521 on the wheel rim may be provided on any type of wheel rim and may be integrally formed with the wheel rim 520 as shown in Figs. 5 and 22 or may be attached by any useful attachment means such as by welding by bolts, rivets, screw-connetions, bayonet connections, etc. Furthermore, the coupling portions 221, 321, 421, 521 may be provided on an adapter device with is permanently or removably mounted at the centre bore of the wheel rim, as set out herein.

A fixing device 401 as shown in Figs. 18a-18c may be operated in a way analogous to the fixing device 1 in Figs. 1-4 by pulling, pushing or turning the end with the second coupling portion 403 or by any useful combination of such operations. The fixing device may be arranged to be operated by direct manipulation of the fixing device or may be arranged to be indirectly operated e.g. by means of a mechanism such as the application and tightening arrangements described in connection with Figs. 8-11 and Figs. 12-15 and/or by an electrically controlled mechanism.

An easy-to use and intuitive snap-fit locking arrangement comprising an intermediate actuation member such as a spring or a gear arranged to directly or indirectly move at least one locking element such as a locking ball or a locking pin between a release position and a fixing position of the fixing device may be preferred for the fixing device 1, 401 as disclosed herein.

However, manually actuated release mechanisms arranged to move one or more locking elements such as a locking pin or a locking groove between a release position and a fixing position are also contemplated.

The anti-skid arrangements described in relation to Figs. 8-11 and Figs. 12-15 should not be considered to be limiting to the invention. In particular, the coupling between the fixing device and the anti-skid device may be different from the coupling arrangements described in connection with the figures and may comprise snap-fittings, bayonet-fittings, etc, as known in the art.

## Claims

1. A fixing device (1; 1'; 1"; 401) for a vehicle tyre (26; 126) anti-skid device (31; 131), said fixing device (1; 1'; 1"; 401) comprising
a first coupling portion (2; 402) for coupling said fixing device to a wheel rim (20; 120; 220; 320; 420; 520) and
a second coupling portion (3; 403) for coupling said fixing device (1; 1'; 1"; 401) to said anti-skid device (31; 131),
**characterized in that** said first coupling portion (2; 402) is in the form of a tubular male or female coupling portion and configured to be coupled at a centre bore (21; 121; 221'; 321'; 421'; 521') in said wheel rim (20; 120; 220; 320; 420; 520) with an axial direction of said fixing device coinciding with an axial direction of said centre bore (21; 121),
said fixing device comprising locking means arranged on said first coupling portion (2; 402) of said fixing device for releasably coupling said fixing device (1; 1'; 1"; 401) to said wheel rim (20; 120; 220; 320; 420; 520) at said centre bore (21; 121; 221'; 321'; 421': 521'),
wherein said releasable locking means comprises a snap-fit locking arrangement such as a snap-in locking arrangement or a snap-on locking arrangement.

2. A fixing device according to claim 1, wherein said snap-fit locking arrangement comprises an intermediate actuation member such as a spring or a gear arranged to directly or indirectly move at least one locking element such as a locking ball (8; 108; 408) or a locking pin between a release position and a fixing position.

3. A fixing device according to claim 1 or 2 wherein said releasable locking means comprises a manually actuated release mechanism arranged to move one or more locking elements such as a locking pin or a locking groove between a release position and a fixing position.

4. A fixing device according to any one of the preceding claims, wherein said releasable locking means are arranged to be actuated by a push-element such as a push-button (12; 112).

5. A fixing device according to any one of the preceding claims, wherein said fixing device (1; 1'; 1"; 401) comprises means (50; 150) for tensioning of an anti-skid device (31; 131) and wherein said means for tensioning of an anti-skid device preferably are coupled to or form part of said second coupling portion (3; 403).

6. A fixing device according to any one of the preceding claims, wherein said first coupling portion (2) of said fixing device (1; 1'; 1") is a male coupling portion which is configured to be inserted into a female coupling portion on said wheel rim, said female coupling portion being fixedly arranged on said wheel rim (20; 120) and being axially aligned with said centre bore (21; 121) of said wheel rim (20; 120) or said female receiving portion being fully or partly constituted by said centre bore of said wheel rim (20; 120).

7. A fixing device according to any one of claims 1-5, wherein said first coupling portion (402) of said fixing device (402) is a female coupling portion which is configured to be applied over a male coupling portion (421; 521) on said wheel rim (420; 520), said male coupling portion (421; 521) being fixedly arranged on said wheel rim (420; 520) and being axially aligned with said centre bore (421'; 521') of said wheel rim (420; 520).

8. A fixing device (1; 1'; 1"; 401) according to any one of the preceding claims, wherein said second coupling portion (3; 403) comprises a first connection element arranged to cooperate with a second connection element arranged on an anti-skid device for forming a coupling arrangement, said first connection element being one of a groove (40), a hinge mounting (151), a pin, a screw thread or a locking rim.

9. An anti-skid arrangement (30; 130) for a vehicle tyre (26; 126), **characterized in that** said anti-skid arrangement (30; 130) comprises a fixing device (1; 1'; 1"; 401) according to any one of claims 1-8 and an anti-skid device (31; 131) comprising
a friction increasing member (36; 136) and
a coupling part for coupling said friction increasing member (36; 136) to said fixing device (1; 1'; 1"; 401),
said coupling part comprising a second connection element arranged to cooperate with said first connection element as defined in claim 8 on said fixing device (1; 1'; 1"; 401) for forming a coupling between said anti-skid device (31; 131) and said fixing device (1; 1'; 1"),
said second connection element being one of a pin (38), a hinge pin (152), a groove, a screw thread or a locking rim.

10. An anti-skid arrangement according to claim 9, wherein said second coupling portion (3; 403) on said fixing device (1; 1'; 1"; 401) and said coupling part on said anti-skid device (31; 131) form a coupling arrangement (50; 150) and are arranged to be connected by means of mating connection elements (38, 40; 151; 152; 155; 156) provided on said fixing device (1; 1'; 1"; 401) and on said anti-skid device (31; 131).

11. A wheel rim (220; 320; 420; 520) being adapted to receive and retain a fixing device (1; 1'; 1"; 401) according to any one of claims 1-8, said wheel rim (220; 320; 420; 520) having a centre bore (221'; 321'; 421'; 521'),
**characterized in that** said wheel rim (220; 320; 420; 520) comprises a wheel rim coupling portion (221; 321; 421; 521) being adapted to cooperate with said first coupling portion (2; 402) on said fixing device (1; 1'; 1"; 401),
said wheel rim coupling portion (221; 321; 421; 521) being axially aligned with said centre bore (21; 121) of said wheel rim (420; 520) and being arranged to protrude from a side of said wheel rim (420; 520) which is facing outward when said wheel rim (420; 520) is mounted on a wheel axle,
said wheel rim (420; 520) further comprising locking elements (222; 322; 422) being adapted to cooperate with said locking elements (8; 408) included in said locking means as defined in any one of claims 1-8 on said fixing device (1; 1'; 1"; 401) for coupling said fixing device (1; 1'; 1"; 401) to said wheel rim (420; 520) at said centre bore (221'; 321'; 421'; 521') of said wheel rim (420; 520).

12. A wheel rim according to claim 11, wherein said coupling portion (221; 321; 421; 521) of said wheel rim (420; 520) and/or said locking elements is/are provided on an adapter device (390), comprising a coupling portion (321) which is configured to cooperate with said first coupling portion (2; 402) on said fixing device,
said adapter device (390) being attached to said wheel rim (220; 320; 420; 520) with said coupling portion (321) of said adapter device (390) being axially aligned with said centre bore (221'; 321'; 421'; 521') of said wheel rim (220; 320; 420; 520), said attached adapter device (390) forming part of said wheel rim (220; 320; 420; 520).

13. A wheel rim according to claim 12, wherein said adapter device (390) comprises holes (392), said holes (392) being positioned at locations on said adapter device (390) corresponding to wheel bolt positions (393; 394) on said wheel rim (220; 320; 420; 520), such as to 4 or 5 wheel bolt positions on said wheel rim, said adapter device being arranged to be attached to said wheel rim (220; 320; 420; 520) by means of said wheel bolts (394).

14. An adapter device (390) comprising a coupling portion (321) being configured to mate with a corresponding first coupling portion (2; 402) as defined in claim 6 or 7 on a fixing device (1; 1'; 1"; 401) according to claim 6 or 7 and being arranged to be attached to a wheel rim (20; 120; 220; 320; 420; 520) having a centre bore (21; 121; 221'; 321'; 421';521') such that said coupling portion (321) of said adapter device (390) is aligned with said centre bore (21; 121; 221'; 321'; 421';521') of said wheel rim (20; 120; 220; 320; 420; 520).

15. Method for mounting an anti-skid device on a vehicle wheel, comprising the steps of:
a) providing a fixing device (1; 1'; 1"; 401) according to any one of claims 1-8,
b) providing an anti-skid device (31; 131) as defined in claim 9,
c) providing a vehicle wheel (25; 125) having a wheel rim (20; 120; 220; 320; 420; 520) with a centre bore (21; 121; 221'; 321'; 421'; 521'),
d) connecting said second coupling portion (3; 403) of said fixing device (1; 1'; 1"; 401) with said coupling portion of said anti-skid device (31; 131),
e) coupling said first coupling portion (2; 402) of said fixing device (1; 1'; 1"; 401) at said centre bore (21; 121, 221'; 321'; 421'; 521') of said wheel rim (20; 120; 220; 320; 420; 520) and ascertaining that said releasable locking means is in a locked position at said centre bore (21; 121, 221'; 321'; 421'; 521') of said wheel rim (20; 120; 220; 320; 420; 520),
f) tensioning said anti-skid device on said vehicle wheel (25; 125);
wherein step d) is performed before step e) or step e) is performed before step d).

## Patentansprüche

1. Fixiervorrichtung (1; 1'; 1"; 401) für eine Antirutschvorrichtung (31; 131) für einen Fahrzeugreifen (26; 126), die Fixiervorrichtung (1; 1'; 1"; 401) umfassend
einen ersten Kopplungsabschnitt (2; 402) zum Koppeln der Fixiervorrichtung an eine Felge (20; 120; 220; 320; 420; 520) und
einen zweiten Kopplungsabschnitt (3; 403) zum Koppeln der Fixiervorrichtung (1; 1'; 1"; 401) an die Antirutschvorrichtung (31; 131),
**dadurch gekennzeichnet, dass** der erste Kopplungsabschnitt (2; 402) die Form eines röhrenförmigen männlichen oder weiblichen Kopplungsabschnitts aufweist und ausgestaltet ist, an einer Mittenbohrung (21; 121; 221'; 321'; 421'; 521') in die Felge (20; 120; 220; 320; 420; 520) in einer axialen Richtung der Fixiervorrichtung, übereinstimmend mit einer axialen Richtung der Mittenbohrung (21; 121), gekoppelt zu werden,
die Fixiervorrichtung ein Verriegelungsmittel umfasst, das an dem ersten Kopplungsabschnitt (2; 402) der Fixiervorrichtung angeordnet ist zum lösbaren Koppeln der Fixiervorrichtung (1; 1'; 1"; 401) an die Felge (20; 120; 220; 320; 420; 520) in der Mittenbohrung (21; 121; 221'; 321'; 421'; 521'),
wobei das lösbare Verriegelungsmittel eine Schnappverriegelungsanordnung wie eine Einrastverriegelungsanordnung oder eine Aufsteckverriegelungsanordnung umfasst.

2. Fixiervorrichtung nach Anspruch 1, wobei die Schnappverriegelungsanordnung ein Zwischenauslösungsglied wie eine Feder oder ein Zahnrad umfasst, das angeordnet ist, mindestens ein Verriegelungselement wie eine Verschlusskugel (8; 108; 408) oder einen Verriegelungsstift zwischen einer Entriegelungsposition und einer Fixierposition direkt oder indirekt zu bewegen.

3. Fixiervorrichtung nach Anspruch 1 oder 2, wobei das lösbare Verriegelungsmittel einen manuell auslösbaren Freigabemechanismus umfasst, der angeordnet ist, ein oder mehrere Verriegelungselemente wie einen Verriegelungsstift oder eine Verriegelungsnut zwischen einer Entriegelungsposition und einer Fixierposition zu bewegen.

4. Fixiervorrichtung nach einem der vorhergehenden Ansprüche, wobei die lösbaren Verriegelungsmittel angeordnet sind, durch ein Schiebeelement wie eine Drucktaste (12; 112) ausgelöst zu werden.

5. Fixiervorrichtung nach einem der vorhergehenden Ansprüche, wobei die Fixiervorrichtung (1; 1'; 1"; 401) Mittel (50; 150) umfasst zum Festziehen einer Antirutschvorrichtung (31; 131) und wobei die Mittel zum Festziehen einer Antirutschvorrichtung vorzugsweise an den zweiten Kopplungsabschnitt (3; 403) gekoppelt sind oder einen Teil von diesem ausbilden.

6. Fixiervorrichtung nach einem der vorhergehenden Ansprüche, wobei der erste Kopplungsabschnitt (2) der Fixiervorrichtung (1; 1'; 1") ein männlicher Kopplungsabschnitt ist, der ausgestaltet ist, in einen weiblichen Kopplungsabschnitt an der Felge eingeführt zu werden, wobei der weibliche Kopplungsabschnitt fest an der Felge (20; 120) angeordnet ist und axial mit der Mittenbohrung (21; 121) der Felge (20; 120) ausgerichtet ist oder der weibliche Aufnahmeabschnitt vollständig oder teilweise durch die Mittenbohrung der Felge (20; 120) ausgeformt ist.

7. Fixiervorrichtung nach einem der Ansprüche 1 - 5, wobei der erste Kopplungsabschnitt (402) der Fixiervorrichtung (402) ein weiblicher Kopplungsabschnitt ist, der ausgestaltet ist, über einen männlichen Kopplungsabschnitt (421; 521) an der Felge (420; 520) angelegt zu werden, wobei der männliche Kopplungsabschnitt (421; 521) fest an der Felge (420; 520) angeordnet ist und axial mit der Mittenbohrung (421'; 521') der Felge (420; 520) ausgerichtet ist.

8. Fixiervorrichtung (1; 1'; 1"; 401) nach einem der vorhergehenden Ansprüche, wobei der zweite Kopplungsabschnitt (3; 403) ein erstes Verbindungselement umfasst, das angeordnet ist, mit einem zweiten Verbindungselement, das an einer Antirutschvorrichtung zum Bilden einer Kopplungsanordnung angeordnet ist, zusammenzuwirken, wobei das erste Verbindungselement eine Nut (40), eine Scharnierbefestigung (151), ein Stift, ein Schraubgewinde oder ein verriegelnder Radkranz ist.

9. Antirutschanordnung (30; 130) für einen Fahrzeugreifen (26; 126), **dadurch gekennzeichnet, dass** die Antirutschanordnung (30; 130) umfasst: eine Fixiervorrichtung (1; 1'; 1"; 401) nach einem der Ansprüche 1 - 8 und eine Antirutschvorrichtung (31; 131), die umfasst:
ein Reibung erhöhendes Bauteil (36; 136) und
ein Kopplungsteil zum Koppeln des Reibung erhöhenden Bauteils (36; 136) an die Fixiervorrichtung (1; 1'; 1"; 401),
wobei das Kopplungsteil ein zweites Verbindungselement umfasst, das angeordnet ist, mit dem ersten Verbindungselement gemäß Anspruch 8 an der Fixiervorrichtung (1; 1'; 1"; 401) zum Bilden einer Kopplung zwischen der Antirutschvorrichtung (31; 131) und der Fixiervorrichtung (1; 1'; 1") zusammenzuwirken,
wobei das zweite Verbindungselement ein Stift (38), ein Scharnierbolzen (152), eine Nut, ein Schraubgewinde oder ein verriegelnder Radkranz ist.

10. Antirutschanordnung nach Anspruch 9, wobei der zweite Kopplungsabschnitt (3; 403) an der Fixiervorrichtung (1; 1'; 1"; 401) und der Kopplungsteil an der Antirutschvorrichtung (31; 131) eine Kopplungsanordnung (50; 150) ausbilden und angeordnet sind, mittels formschlüssigen Verbindungselementen (38; 40; 151; 152; 155; 156), die an der Fixiervorrichtung (1; 1'; 1"; 401) und an der Antirutschvorrichtung (31; 131) vorgesehen sind, verbunden zu werden.

11. Felge (220; 320; 420; 520), die ausgelegt ist, eine Fixiervorrichtung (1; 1'; 1"; 401) nach einem der Ansprüche 1 - 8 aufzunehmen und zu halten, wobei die Felge (220; 320; 420; 520) eine Mittenbohrung (221'; 321'; 421'; 521') aufweist,
**dadurch gekennzeichnet, dass** die Felge (220; 320; 420; 520) einen Felgen-Kopplungsabschnitt (221; 321; 421; 521) umfasst, der ausgelegt ist, mit dem ersten Kopplungsabschnitt (2; 402) an der Fixiervorrichtung (1; 1'; 1"; 401) zusammenzuwirken,
der Felgen-Kopplungsabschnitt (221; 321; 421; 521) axial mit der Mittenbohrung (21; 121) der Felge (420; 520) ausgerichtet ist und angeordnet ist, von einer Seite der Felge (420; 520) hervorzuragen, die nach außen zeigt, wenn die Felge (420; 520) an einer Radachse befestigt ist,
die Felge (420; 520) ferner Verriegelungselemente (222; 322; 422) umfasst, die ausgelegt sind, mit Verriegelungselementen (8; 408) zusammenzuwirken, die in den Verriegelungsmitteln gemäß einem der Ansprüche 1 - 8 an der Fixiervorrichtung (1; 1'; 1", 401) zum Koppeln der Fixiervorrichtung (1; 1'; 1"; 401) an die Felge (420; 520) in der Mittenbohrung (221'; 321'; 421'; 521') der Felge (420; 520) enthalten sind.

12. Felge nach Anspruch 11, wobei der Kopplungsabschnitt (221; 321; 421; 521) der Felge (420; 520) und/oder die Verriegelungselemente an einer Adaptervorrichtung (390) vorgesehen sind/ist, umfassend einen Kopplungsabschnitt (321), der ausgestaltet ist, mit dem ersten Kopplungsabschnitt (2; 402) an der Fixiervorrichtung zusammenzuwirken,
wobei die Adaptervorrichtung (390) an die Felge (220; 320; 420; 520) angebracht ist, wobei der Kopplungsabschnitt (321) der Adaptervorrichtung (390) axial mit der Mittenbohrung (221'; 321'; 421'; 521') der Felge (220; 320; 420; 520) ausgerichtet ist, wobei die angebrachte Adaptervorrichtung (390) einen Teil der Felge (220; 320; 420; 520) bildet.

13. Felge nach Anspruch 12, wobei die Adaptervorrichtung (390) Löcher (392) umfasst, wobei die Löcher (392) an Stellen an der Adaptervorrichtung (390) positioniert sind, die Radbolzenpositionen (393; 394) an der Felge (220; 320; 420; 520), wie etwa bis 4 oder 5 Radbolzenpositionen an der Felge, entsprechen, wobei die Adaptervorrichtung angeordnet ist, mittels der Radbolzen (394) an die Felge (220; 320; 420; 520) angebracht zu werden.

14. Adaptervorrichtung (390) umfassend einen Kopplungsabschnitt (321), der ausgestaltet ist, mit einem entsprechenden ersten Kopplungsabschnitt (2; 402) gemäß Anspruch 6 oder 7 an einer Fixiervorrichtung (1; 1'; 1"; 401) nach Anspruch 6 oder 7 zusammenzupassen, und der angeordnet ist, an eine Felge (20; 120; 220; 320; 420; 520) befestigt zu werden, die eine Mittenbohrung (21; 121; 221'; 321'; 421'; 521') aufweist, so dass der Kopplungsabschnitt (321) der Adaptervorrichtung (390) mit der Mittenbohrung (21; 121,221'; 321'; 421'; 521') der Felge (20; 120; 220; 320; 420; 520) ausgerichtet ist.

15. Verfahren zum Montieren einer Antirutschvorrichtung an einem Fahrzeugreifen, die folgenden Schritte umfassend:
a) Vorsehen einer Fixiervorrichtung (1; 1'; 1"; 401) nach einem der Ansprüche 1 - 8;
b) Vorsehen einer Antirutschvorrichtung (31; 131) gemäß Anspruch 9,
c) Vorsehen eines Fahrzeugreifens (25; 125) aufweisend eine Felge (20; 120; 220; 320; 420; 520) mit einer Mittenbohrung (21; 121; 221'; 321'; 421'; 521'),
d) Verbinden des zweiten Kopplungsabschnitts (3; 403) der Fixiervorrichtung (1; 1'; 1"; 401) mit dem Kopplungsabschnitt der Antirutschvorrichtung (31; 131),
e) Koppeln des ersten Kopplungsabschnitts (2; 402) der Fixiervorrichtung (1; 1'; 1"; 401) in der Mittenbohrung (21; 121; 221'; 321'; 421'; 521') der Felge (20; 120; 220; 320; 420; 520) und Sicherstellen, dass sich das lösbare Verriegelungsmittel in einer verschlossenen Position in der Mittenbohrung (21; 121; 221'; 321'; 421'; 521') der Felge (20; 120; 220; 320; 420; 520) befindet,
f) Festziehen der Antirutschvorrichtung an dem Fahrzeugreifen (25; 125);
wobei Schritt d) vor Schritt e) durchgeführt wird oder Schritt e) vor Schritt d) durchgeführt wird.

## Revendications

1. Dispositif de fixation (1 ; 1' ; 1" ; 401) pour un dispositif antidérapant (31 ; 131) d'un pneu de véhicule (26 ; 126), ledit dispositif de fixation (1 ; 1' ; 1" ; 401) comprenant
une première partie de couplage (2 ; 402) pour coupler ledit dispositif de fixation à une jante (20 ; 120 ; 220 ; 320 ; 420 ; 520) et
une seconde partie de couplage (3 ; 403) pour coupler ledit dispositif de fixation (1 ; 1' ; 1" ; 401) audit dispositif antidérapant (31 ; 131),
**caractérisé en ce que** ladite première partie de couplage (2 ; 402) est sous la forme d'une partie de couplage tubulaire mâle ou femelle et configurée pour être couplée à un alésage central (21 ; 121 ; 221' ; 321' ; 421' ; 521') dans ladite jante (20 ; 120 ; 220 ; 320 ; 420 ; 520) avec une direction axiale dudit dispositif de fixation qui coïncide avec une direction axiale dudit alésage central (21 ; 121),
ledit dispositif de fixation comprenant un moyen de verrouillage disposé sur ladite première partie de couplage (2 ; 402) dudit dispositif de fixation pour un couplage de manière amovible dudit dispositif de fixation (1 ; 1' ; 1" ; 401) à ladite jante (20 ; 120 ; 220 ; 320 ; 420 ; 520) au niveau dudit alésage central (21 ; 121 ; 221' ; 321' ; 421' ; 521'),
dans lequel ledit moyen de verrouillage amovible comprend un agencement de verrouillage à encliquetage tel qu'un agencement de verrouillage à déclic ou un agencement de verrouillage par pression.

2. Dispositif de fixation selon la revendication 1, dans lequel ledit agencement de verrouillage à encliquetage comprend un organe d'actionnement intermédiaire tel qu'un ressort ou un engrenage disposé pour déplacer directement ou indirectement au moins un élément de verrouillage tel qu'une bille de verrouillage (8 ; 108 ; 408) ou une goupille de verrouillage entre une position de libération et une position de fixation.

3. Dispositif de fixation selon la revendication 1 ou 2, dans lequel le moyen de verrouillage amovible comprend un mécanisme de libération actionné manuellement disposé pour déplacer un ou plusieurs éléments de verrouillage tels qu'une goupille de verrouillage ou une rainure de verrouillage entre une position de libération et une position de fixation.

4. Dispositif de fixation selon l'une quelconque des revendications précédentes, dans lequel lesdits moyens de verrouillage amovibles sont disposés pour être actionnés par un élément poussoir tel qu'un bouton-poussoir (12 ; 112).

5. Dispositif de fixation selon l'une quelconque des revendications précédentes, dans lequel ledit dispositif de fixation (1 ; 1' ; 1" ; 401) comprend des moyens (50 ; 150) pour tendre un dispositif antidérapant (31 ; 131) et dans lequel lesdits moyens pour tendre un dispositif antidérapant sont de préférence couplés à ou font partie de ladite seconde partie de couplage (3 ; 403).

6. Dispositif de fixation selon l'une quelconque des revendications précédentes, dans lequel ladite première partie de couplage (2) dudit dispositif de fixation (1 ; 1' ; 1") est une partie de couplage mâle qui est configurée pour être insérée dans une partie de couplage femelle sur ladite jante, ladite partie de couplage femelle étant disposée de manière fixe sur ladite jante (20 ; 120) et étant alignée de manière axiale avec ledit alésage central (21 ; 121) de ladite jante (20 ; 120) ou ladite partie de réception femelle étant totalement ou partiellement constituée par ledit alésage central de ladite jante (20 ; 120).

7. Dispositif de fixation selon l'une quelconque des revendications 1 à 5, dans lequel ladite première partie de couplage (402) dudit dispositif de fixation (402) est une partie de couplage femelle qui est configurée pour être appliquée sur une partie de couplage mâle (421 ; 521) sur ladite jante (420 ; 520), ladite partie de couplage mâle (421 ; 521) étant disposée de manière fixe avec ladite jante (420 ; 520) et étant alignée de manière axiale avec ledit alésage central (421' ; 521') de ladite jante (420 ; 520).

8. Dispositif de fixation (1 ; 1' ; 1" ; 401) selon l'une quelconque des revendications précédentes, dans lequel ladite seconde partie de couplage (3 ; 403) comprend un premier élément de raccordement disposé pour coopérer avec un second élément de raccordement disposé sur un dispositif antidérapant pour former un agencement de couplage, ledit premier élément de raccordement étant l'un parmi une rainure (40), un montage de charnière (151), une broche, un pas de vis ou un rebord de verrouillage.

9. Agencement antidérapant (30 ; 130) pour un pneu de véhicule (26 ; 126), **caractérisé en ce que** ledit agencement antidérapant (30 ; 130) comprend un dispositif de fixation (1 ; 1' ; 1" ; 401) selon l'une quelconque des revendications 1 à 8 et un dispositif antidérapant (31 ; 131) comprenant
un élément d'augmentation de friction (36 ; 136) et
une partie de couplage pour le couplage dudit élément d'augmentation de friction (36 ; 136) audit dispositif de fixation (1 ; 1' ; 1" ; 401),
ladite partie de couplage comprenant un second élément de raccordement disposé pour coopérer avec ledit premier élément de raccordement tel que défini dans la revendication 8 sur ledit dispositif de fixation (1 ; 1' ; 1" ; 401) pour former un couplage entre ledit dispositif antidérapant (31 ; 131) et ledit dispositif de fixation (1 ; 1' ; 1"),
ledit second élément de raccordement étant un parmi une broche (38), un axe de charnière (152), une rainure, un pas de vis ou un rebord de verrouillage.

10. Agencement antidérapant selon la revendication 9, dans lequel ladite partie de couplage (3 ; 403) sur ledit dispositif de fixation (1 ; 1' ; 1" ; 401) et ladite partie de couplage sur ledit dispositif antidérapant (31 ; 131) forment un agencement de couplage (50 ; 150) et sont disposées pour être reliées par le biais d'éléments de raccordement conjugués (38, 40 ; 151 ; 152 ; 155 ; 156) prévus sur ledit dispositif de fixation (1 ; 1' ; 1" ; 401) et sur ledit dispositif antidérapant (31 ; 131).

11. Jante (220 ; 320 ; 420 ; 520) qui est adaptée pour recevoir et retenir un dispositif de fixation (1 ; 1' ; 1" ; 401) selon l'une quelconque des revendications 1 à 8, ladite jante (220 ; 320 ; 420 ; 520) ayant un alésage central (221' ; 321' ; 421' ; 521'),
**caractérisée en ce que** ladite jante (220 ; 320 ; 420 ; 520) comprend une partie de couplage de jante (221 ; 321 ; 421 ; 521) qui est adaptée pour coopérer avec ladite première partie de couplage (2 ; 402) sur ledit dispositif de fixation (1 ; 1' ; 1" ; 401),
ladite partie de couplage de jante (221 ; 321 ; 421 ; 521) étant alignée de manière axiale avec ledit alésage central (21 ; 121) de ladite jante (420 ; 520) et étant disposée pour faire saillie depuis un côté de ladite jante (420 ; 520) qui est orientée vers l'extérieur lorsque ladite jante (420 ; 520) est montée sur un axe de roue,
ladite jante (420 ; 520) comprenant en outre des éléments de verrouillage (222 ; 322 ; 422) qui sont adaptés pour coopérer avec des éléments de verrouillage (8 ; 408) inclus dans ledit moyen de verrouillage tel que défini selon l'une quelconque des revendications 1 à 8 sur ledit dispositif de fixation (1 ; 1' ; 1" ; 401) pour le couplage dudit dispositif de fixation (1 ; 1' ; 1" ; 401) à ladite jante (420 ; 520) au niveau dudit alésage central (221' ; 321' ; 421' ; 521') de ladite jante (420 ; 520).

12. Jante selon la revendication 11, dans laquelle ladite partie de couplage (221 ; 321 ; 421 ; 521) de ladite jante (420 ; 520) et/ou lesdits éléments de verrouillage est/sont prévue/prévus sur un dispositif adaptateur (390) comprenant une partie de couplage (321) qui est configurée pour coopérer avec ladite première partie de couplage (2 ; 402) sur ledit dispositif de fixation,
ledit dispositif adaptateur (390) étant attaché à ladite jante (220 ; 320 ; 420 ; 520) avec ladite partie de couplage (321) dudit dispositif adaptateur (390) qui est alignée de manière axiale avec ledit alésage central (221' ; 321' ; 421' ; 521') de ladite jante (220 ; 320 ; 420 ; 520), ledit dispositif adaptateur (390) attaché faisant partie de ladite jante (220 ; 320 ; 420 ; 520).

13. Jante selon la revendication 12, dans laquelle ledit dispositif adaptateur (390) comprend des trous (392), lesdits trous (392) étant positionnés sur des positions sur ledit dispositif adaptateur (390) qui correspondent aux positions de boulons de roue (393 ; 394) sur ladite jante (220 ; 320 ; 420 ; 520), telles que 4 ou 5 positions de boulons de roue sur ladite jante, ledit dispositif adaptateur étant attaché à ladite jante (220 ; 320 ; 420 ; 520) par le biais desdits boulons de roues (394).

14. Dispositif adaptateur (390) comprenant une partie de couplage (321) qui est configurée pour s'accoupler avec une première partie de couplage (2 ; 402) correspondante telle que définie dans la revendication 6 ou 7 sur un dispositif de fixation (1 ; 1' ; 1" ; 401) selon la revendication 6 ou 7 et étant disposée pour être attachée à une jante (20 ; 120 ; 220 ; 320 ; 420 ; 520) ayant un alésage central (21 ; 121 ; 221' ; 321' ; 421' ; 521') de sorte que ladite partie de couplage (321) dudit dispositif adaptateur (390) est alignée avec ledit alésage central (21 ; 121 ; 221' ; 321' ; 421' ; 521') de ladite jante (20 ; 120 ; 220 ; 320 ; 420 ; 520).

15. Procédé de montage d'un dispositif antidérapant sur une roue de véhicule, comprenant les étapes de :
a) fournir un dispositif de fixation (1 ; 1' ; 1" ; 401) selon l'une quelconque des revendications 1 à 8,
b) fournir un dispositif antidérapant (31 ; 131) selon la revendication 9,
c) fournir une roue de véhicule (25 ; 125) ayant une jante (20 ; 120 ; 220 ; 320 ; 420 ; 520) avec un alésage central (21 ; 121 ; 221' ; 321' ; 421' ; 521'),
d) raccorder ladite seconde partie de couplage (3 ; 403) dudit dispositif de fixation (1 ; l' ; 1" ; 401) à ladite partie de couplage dudit dispositif antidérapant (31 ; 131),
e) coupler ladite première partie de couplage (2 ; 402) dudit dispositif de fixation (1 ; 1' ; 1" ; 401) audit alésage central (21 ; 121 ; 221' ; 321' ; 421' ; 521') de ladite jante (20 ; 120 ; 220 ; 320 ; 420 ; 520) et vérifier que ledit moyen de verrouillage amovible est en position verrouillée au niveau dudit alésage central (21 ; 121 ; 221' ; 321' ; 421' ; 521') de ladite jante (20 ; 120 ; 220 ; 320 ; 420 ; 520),
f) tendre ledit dispositif antidérapant sur ladite roue de véhicule (25 ; 125) ;
dans lequel l'étape d) est réalisée avant l'étape e) ou l'étape e) est réalisé avant l'étape d).
